# EUROPÄISCHE PATENTSCHRIFT

(11) **EP 3 736 875 B1**
(45) Veröffentlichungstag und Bekanntmachung des Hinweises auf die Patenterteilung: **30.04.2025**
(21) Anmeldenummer: 19173820.2
(22) Anmeldetag: 10.05.2019
(51) Int. Cl.: H01M 10/48, H01M 50/211, H01M 50/296, H01M 50/178, H01M 50/519, H01M 50/55, H01M 10/613, H01M 10/63, H01M 10/647, H01M 50/553, H01M 50/557, H01M 10/04, H01M 10/42, H01M 10/6235, H01M 50/516, H01M 50/566

(54) **AKKUPACK, BEARBEITUNGSSYSTEM UND VERFAHREN ZUR HERSTELLUNG EINES AKKUPACKS**
BATTERY PACK, PROCESSING SYSTEM AND METHOD FOR PRODUCING A BATTERY PACK
BLOC D'ACCUMULATEUR, SYSTÈME D'USINAGE ET PROCÉDÉ DE FABRICATION D'UN BLOC D'ACCUMULATEUR

(43) Veröffentlichungstag der Anmeldung: 11.11.2020
(73) Patentinhaber: Andreas Stihl AG & Co. KG, 71336 Waiblingen (DE); Murata Manufacturing Co., Ltd., Nagaokakyo-shi, Kyoto 617-8555 (JP)
(72) Erfinder: SAUERTEIG, Daniel, 71394 Kernen im Remstal (DE); SCHOLL, Julien, 71336 Waiblingen (DE); OZAWA, Kenichi, Koriyama-shi 963-0531 Fukushima (JP); SATO, Takayuki, Koriyama-shi 963-0531 Fukushima (JP); MISAWA, Daiki, Koriyama-shi 963-0531 Fukushima (JP); WAGNER, Daniel, 73650 Winterbach (DE); WILKA, Marcel, 73560 Böbingen (DE); SCHURR, Martin, 73557 Mutlangen (DE); BOSSMANN, Uwe, 73732 Esslingen a.N. (DE); LIEPOLD, Dirk, 70736 Fellbach (DE)
(74) Vertreter: Patentanwälte Ruff, Wilhelm, Beier, Dauster & Partner mbB

(56) Entgegenhaltungen:
- EP-A1- 1 727 223
- DE-A1- 102009 040 128
- DE-A1- 102013 211 459
- JP-A- 2006 156 171

## Beschreibung

### ANWENDUNGSGEBIET UND STAND DER TECHNIK

Die Erfindung bezieht sich auf einen Akkupack zur Versorgung eines elektrisch angetriebenen Bearbeitungsgeräts mit elektrischer Antriebsleistung, auf ein Bearbeitungssystem aufweisend einen solchen Akkupack und ein elektrisch angetriebenes Bearbeitungsgerät und auf ein Verfahren zur Herstellung eines Akkupacks zur Versorgung eines elektrisch angetriebenen Bearbeitungsgeräts mit elektrischer Antriebsleistung.

Die EP 1 727 223 A1 offenbart einen Batteriepack, in dem eine Mehrzahl von wiederaufladbaren Batterien von einem Mittelrahmen, einem bodenseitigen Rahmen und einem terminalseitigen Rahmen in einer parallel beabstandeten Beziehung gehalten sind. Die Mehrzahl von wiederaufladbaren Batterien sind in Reihe geschaltet und mit einem Schaltkreissubstrat integriert, indem das Schaltkreissubstrat auf dem terminalseitigen Rahmen montiert ist. Das Schaltkreissubstrat ist mit einer Harzgussform versehen, wodurch der Batteriepack sogar im Falle des Eintritts von Wasser oder Staub durch Öffnungen, die zur Unterdrückung eines Temperaturanstiegs der wiederaufladbaren Batterien vorgesehen sind, frei von Schäden an elektrischen Schaltkreisteilen ist. Die Mehrzahl von wiederaufladbaren Batterien sind in Reihe geschaltet, indem Verbindungsplatten mit den positiven und negativen Elektrodenterminals verbunden sind, die an Dichtungsplatten der Mehrzahl von wiederaufladbaren Batterien ausgebildet sind, die von dem terminalseitigen Rahmen gehalten sind. Verbindungsvorsprünge, die an jeder Verbindungsplatte ausgebildet sind, sind in entsprechende Verbindungslöcher in dem Schaltkreissubstrat eingepasst, um das Schaltkreissubstrat mit den wiederaufladbaren Batterien zu integrieren, wodurch eine Verdrahtung zum Verbinden jeder der wiederaufladbaren Batterien mit dem Schaltkreissubstrat einfach gemacht ist.

Die JP 2006 156171 A offenbart einen Batteriepack, der Sekundärbatterien in einem Gehäuse aufnimmt. Der Batteriepack hat in dem Gehäuse ein Paar Trennwände, die beide Enden der Sekundärbatterien wasserdicht passieren, um ein Inneres des Gehäuses in eine Kühlkammer zwischen und innerhalb des Trennwandpaares und geschlossene Kammern außerhalb der Trennwände zu unterteilen. Das Gehäuse trennt die Kühlkammer und die geschlossenen Kammern mittels der Trennwände in der wasserdichten Struktur, wobei die Sekundärbatterien an beiden Enden in den geschlossenen Kammern und in der Mitte in der Kühlkammer positioniert sind. Die Kühlkammer öffnet sich aus dem Gehäuse heraus und belüftet das Gehäuse, um die Mitte der Sekundärbatterien mit Luft zu kühlen. Der Batteriepack nimmt die Enden der Sekundärbatterien in dem Gehäuse auf, indem es die geschlossenen Kammern, in denen die Enden der Sekundärbatterien positioniert sind, mittels der Trennwände in der wasserdichten Struktur von der Kühlkammer trennt.

Die DE 10 2009 040 128 A1 offenbart eine Baugruppe, die eine Vielzahl von länglich geformten Batteriezellen aufweist. Jede der Batteriezellen weist eine Oberseite, eine Längsseite und eine Unterseite auf. Einer der Pole Pluspol und Minuspol der Batteriezelle ist an der Oberseite und der jeweils andere der Pole Pluspol und Minuspol ist an der Unterseite der Batteriezelle vorgesehen. Zudem weisen die Batteriezellen jeweils an ihrer Oberseite eine Öffnung zum Entgasen der Batteriezelle im Fehlerfall auf. Ein erster Ableiter ist zum elektrischen Verbinden des an der Oberseite vorgesehenen Pols von mindestens einer der Batteriezellen vorgesehen. Eine elastische erste Matte mit einer Oberseite und einer Unterseite ist ebenfalls Teil der Baugruppe. Die erste Matte weist Löcher, die von der Oberseite zu der Unterseite reichen, auf. Die Oberseiten der Batteriezellen sind auf der Oberseite der ersten Matte positioniert. Eine Vergussmasse füllt die Löcher der ersten Matte aus und umfasst zumindest teilweise die Längsseite der Batteriezellen.

Die DE 10 2013 211 459 A1 offenbart einen Handwerkzeugmaschinenakkupack mit einer Mehrzahl von Akkuzellen, die an einem Ende einen positiven Zellpol und an einem gegenüberliegenden Ende einen negativen Zellpol aufweisen, mit Verbindungsleitern, die dazu vorgesehen sind, die Akkuzellen elektrisch zu verbinden, mit einer Verbindungsseite und mit einer der Verbindungsseite gegenüberliegenden Unterseite. Die Akkuzellen weisen jeweils zumindest einen integrierten Zellverbinder auf, der dazu vorgesehen ist, einen der Zellpole der Akkuzelle am Ende des anderen Zellpols der Akkuzelle elektrisch kontaktierbar zur Verfügung zu stellen. Die Verbindungsleiter sind zur elektrischen Verbindung der Akkuzellen ausschließlich auf der Verbindungsseite angeordnet. Auf der Verbindungsseite ist ein Elektronikmodul angeordnet. Die Akkuzellen sind zumindest teilweise in einer Vergussmasse eingebettet.

### AUFGABE UND LÖSUNG

Der Erfindung liegt als Aufgabe die Bereitstellung eines Akkupacks zur Versorgung eines elektrisch angetriebenen Bearbeitungsgeräts mit elektrischer Antriebsleistung, eines

Bearbeitungssystems aufweisend einen solchen Akkupack und ein elektrisch angetriebenes Bearbeitungsgerät und eines Verfahrens zur Herstellung eines Akkupacks zur Versorgung eines elektrisch angetriebenen Bearbeitungsgeräts mit elektrischer Antriebsleistung, wobei der Akkupack und das Verfahren jeweils verbesserte Eigenschaften aufweisen, zugrunde.

Die Erfindung löst die Aufgabe durch die Bereitstellung eines Akkupacks mit den Merkmalen des Anspruchs 1, eines Bearbeitungssystems mit den Merkmalen des Anspruchs 13 und eines Verfahrens mit den Merkmalen des Anspruchs 14. Vorteilhafte Weiterbildungen und/oder Ausgestaltungen der Erfindung sind in den abhängigen Ansprüchen beschrieben.

Der erfindungsgemäße Akkupack ist zur, insbesondere automatischen, Versorgung eines elektrisch angetriebenen Bearbeitungsgeräts, insbesondere Garten-, Forst- und/oder Baubearbeitungsgeräts, mit elektrischer Antriebsleistung ausgebildet bzw. konfiguriert. Der Akkupack weist mehrere Akkumulatorzellen, mindestens eine Leiterplatte und ein Akkupackgehäuse auf. Die Akkumulatorzellen weisen Zellkontakte auf. Die mindestens eine Leiterplatte ist mit den Zellkontakten elektrisch verbunden. Das Akkupackgehäuse weist ein erstes Akkupackgehäuseteil und ein zweites Akkupackgehäuseteil auf. Das erste Akkupackgehäuseteil und das zweite Akkupackgehäuseteil sind durcheinander verschlossen. Insbesondere alle, die Akkumulatorzellen sind, insbesondere vollständig, innerhalb des Akkupackgehäuses, insbesondere des ersten Akkupackgehäuseteils und des zweiten Akkupackgehäuseteils angeordnet.

Zusätzlich sind, insbesondere alle, die Zellkontakte und die mindestens eine Leiterplatte, insbesondere vollständig, innerhalb des zweiten Akkupackgehäuseteils angeordnet. Das zweite Akkupackgehäuseteil ist als Gießform für eine Vergussmasse ausgebildet bzw. konfiguriert. Insbesondere alle, die Zellkontakte und die mindestens eine Leiterplatte sind, insbesondere vollständig, durch die Vergussmasse, insbesondere innerhalb des zweiten Akkupackgehäuseteils, eingeschlossen.

Zusätzlich oder alternativ ist die mindestens eine Leiterplatte, insbesondere vollständig, innerhalb des Akkupackgehäuses angeordnet. Das eine Akkupackgehäuseteil, insbesondere das zweite Akkupackgehäuseteil, weist mindestens ein Gewinde auf. Das andere Akkupackgehäuseteil, insbesondere das erste Akkupackgehäuseteil, weist mindestens eine Kopfanlagefläche auf. Die Kopfanlagefläche ist an einem dem einen Akkupackgehäuseteil benachbarten bzw. nahen Ende des anderen Akkupackgehäuseteils angeordnet. Der Akkupack weist mindestens eine Schraube auf. Die Schraube ist zur mechanischen Verbindung des einen Akkupackgehäuseteils und des anderen Akkupackgehäuseteils miteinander in das Gewinde eingeschraubt und liegt mit einem Schraubenkopf an der Kopfanlagefläche an.

Das Akkupackgehäuse ermöglicht, insbesondere ermöglichen das erste Akkupackgehäuseteil und das zweite Akkupackgehäuseteil, einen Schutz der Akkumulatorzellen und der mindestens einen Leiterplatte, insbesondere vor mechanischer Belastung und/oder Berührung.

Die Ausbildung des zweiten Akkupackgehäuseteils als Gießform ermöglicht somit eine Doppelfunktion bzw. einen Synergieeffekt. Zugleich ermöglicht dies, dass die Zellkontakte und die mindestens eine Leiterplatte zeitlich nach einem Anordnen innerhalb des zweiten Akkupackgehäuseteils durch die Vergussmasse eingeschlossen werden können, und somit eine relativ einfache Herstellung des Akkupacks. Insbesondere kann die Vergussmasse einen Schutz der Akkumulatorzellen und der mindestens einen Leiterplatte vor Feuchte und/oder mechanischer Belastung und/oder Berührung und/oder eine elektrische Isolation und/oder eine Wärmeableitung, insbesondere der Zellkontakte und/oder der mindestens einen Leiterplatte, ermöglichen.

Die Anordnung der Kopfanlagefläche an dem benachbarten Ende des anderen Akkupackgehäuseteils ermöglicht, dass relativ wenig Baulänge für die Schraube in dem anderen Akkupackgehäuseteil vorgesehen sein braucht und somit anderweitig für das andere Akkupackgehäuseteil und/oder das eine Akkupackgehäuseteil genutzt werden kann.

Insbesondere können die Akkumulatorzellen zur Versorgung des Bearbeitungsgeräts mit der Antriebsleistung ausgebildet sein. Zusätzlich oder alternativ können die Akkumulatorzellen jeweils einzelne wiederaufladbare Speicherelemente für elektrische Energie auf elektrochemischer Basis sein. Insbesondere können die Akkumulatorzellen Lithium-Ionen-Akkumulatorzellen sein. Weiter zusätzlich oder alternativ können die Akkumulatorzellen elektrisch zusammengeschaltet sein, insbesondere parallel oder seriell geschaltet sein. Insbesondere können die Zellkontakte, insbesondere jeweils, nächster Akkumulatorzellen miteinander elektrisch verbunden sein. Weiter zusätzlich oder alternativ können die Akkumulatorzellen gleich, insbesondere typ- und/oder baugleich, sein. Weiter zusätzlich oder alternativ können die Zellkontakte als Terminals, Pole oder Anschluss-Elektroden bezeichnet werden. Weiter zusätzlich oder alternativ können die Zellkontakte spannungsführend sein, insbesondere spannungsführende Oberflächen aufweisen.

Die mindestens eine Leiterplatte kann spannungsführend sein, insbesondere spannungsführende Oberflächen aufweisen.

Zeitlich vor einem Anordnen und/oder zeitlich vor einem Einschließen können das erste Akkupackgehäuseteil und das zweite Akkupackgehäuseteil zum Anordnen der Akkumulatorzellen und der mindestens einen Leiterplatte innerhalb des Akkupackgehäuses und/oder zum Einschließen der Zellkontakte und der mindestens einen Leiterplatte durch die Vergussmasse voneinander entfernt sein bzw. brauchen nicht durcheinander verschlossen sein. Zusätzlich oder alternativ kann eine Öffnung des ersten Akkupackgehäuseteils dem zweiten Akkupackgehäuseteil zugewandt sein und/oder eine Öffnung des zweiten Akkupackgehäuseteils kann dem ersten Akkupackgehäuseteil zugewandt sein. Weiter zusätzlich oder alternativ können das erste Akkupackgehäuseteil und das zweite Akkupackgehäuseteil in einer Verbindungsrichtung, insbesondere Längsrichtung, aneinander anschließen bzw. sich berühren. Weiter zusätzlich oder alternativ kann das Akkupackgehäuse ein Außengehäuse bzw. ein äußerstes Gehäuse des Akkupacks bzw. von außen zugänglich sein.

Die Vergussmasse kann elektrisch isolierend und/oder wärmeleitfähig sein. Zusätzlich oder alternativ kann die Vergussmasse ein Gießharz, insbesondere ein Kunstharz, sein. Weiter zusätzlich oder alternativ kann die Vergussmasse in einem festen Zustand sein.

Das Gewinde und/oder die Schraube können/kann in der Verbindungsrichtung verlaufen. Zusätzlich oder alternativ können/kann das Gewinde und/oder die Schraube von außerhalb des Akkupackgehäuses zugänglich sein.

An dem benachbarten Ende des anderen Akkupackgehäuseteils angeordnet kann bedeuten, dass die Kopfanlagefläche maximal 20 Millimeter (mm), insbesondere maximal 10 mm, insbesondere maximal 5 mm, zu dem benachbarten Ende des anderen Akkupackgehäuseteils beabstandet angeordnet sein kann.

In einer Weiterbildung der Erfindung ist das erste Akkupackgehäuseteil ein Gehäusebehälter und das zweite Akkupackgehäuseteil ist ein Gehäusedeckel. Dies ermöglicht, dass relativ wenig Vergussmasse zum Einschließen der Zellkontakte und der mindestens einen Leiterplatte, insbesondere zum, insbesondere vollständigen, Füllen des zweiten Akkupackgehäuseteils, ausreichen kann. Insbesondere kann der Gehäusedeckel in der Verbindungsrichtung kürzer als der Gehäusebehälter sein. Zusätzlich oder alternativ können die Akkumulatorzellen Zellhüllen aufweisen, wobei die Zellhüllen, insbesondere vollständig, innerhalb des Gehäusebehälters angeordnet sein können.

In einer Weiterbildung der Erfindung weisen die Akkumulatorzellen Zell- bzw. Außenhüllen auf. Die Vergussmasse reicht mindestens bis zu, insbesondere allen, den Zellhüllen hin.

Zusätzlich oder alternativ reicht die Vergussmasse, insbesondere genau, bis zu einem dem ersten Akkupackgehäuseteil benachbarten bzw. nahen Ende des zweiten Akkupackgehäuseteils hin.

Zusätzlich oder alternativ reicht die Vergussmasse mindestens bis zu einem dem zweiten Akkupackgehäuseteil benachbarten bzw. nahen Ende des ersten Akkupackgehäuseteils hin.

Das Hinreichen bis zu den Zellhüllen ermöglicht, dass die Zellkontakte vollständig durch die Vergussmasse eingeschlossen sein können.

Das Hinreichen bis zu dem benachbarten Ende des zweiten Akkupackgehäuseteils und/oder bis zu dem benachbarten Ende des ersten Akkupackgehäuseteils ermöglicht ein Vergießen bzw. Abdichten und/oder Versiegeln des Akkupackgehäuses, insbesondere einer Trenn- bzw. Schnittstelle zwischen dem ersten Akkupackgehäuseteil und dem zweiten Akkupackgehäuseteil, und/oder eine zusätzliche mechanische Verbindung des ersten Akkupackgehäuseteils und des zweiten Akkupackgehäuseteils miteinander.

Insbesondere können die Zellkontakte und die Zellhüllen, insbesondere jeweils, voneinander elektrisch isoliert sein, insbesondere dass die Zellhüllen nicht spannungsführend sein können. Zusätzlich oder alternativ können die Zellhüllen teilweise nicht durch die Vergussmasse eingeschlossen sein, insbesondere dass aus den Zellhüllen Gas entweichen kann.

Die Vergussmasse braucht oder kann nicht weiter, insbesondere in der Verbindungsrichtung, als bis zu dem benachbarten Ende des zweiten Akkupackgehäuseteils hinreichen. Zusätzlich oder alternativ können das erste Akkupackgehäuseteil und das zweite Akkupackgehäuseteil sich in der Verbindungsrichtung, überdecken bzw. überlappen, insbesondere das zweite Akkupackgehäuseteil außen das erste Akkupackgehäuseteil innen.

In einer Weiterbildung der Erfindung sind, insbesondere alle, die Zellkontakte und die mindestens eine Leiterplatte durch die Vergussmasse, insbesondere nur, in einem, insbesondere einzigen, gemeinsamen Vergussblock eingeschlossen. Dies ermöglicht, dass die Zellkontakte und die mindestens eine Leiterplatte zeitlich nach einem Anordnen innerhalb des zweiten Akkupackgehäuseteils in, insbesondere nur, einem, insbesondere einzigen, gemeinsamen Vergussschritt durch die Vergussmasse eingeschlossen werden können. Zusätzlich oder alternativ ermöglicht dies eine besonders gute elektrische Isolation der Zellkontakte und der mindestens einen elektrischen Leiterplatte.

In einer Weiterbildung der Erfindung sind, insbesondere alle, die Akkumulatorzellen derart ausgebildet bzw. konfiguriert und in einem Zellblock, insbesondere einem Stapel, angeordnet, dass, insbesondere alle, die Zellkontakte, insbesondere nur, auf einer, insbesondere einzigen, gemeinsamen Kontaktseite des Zellblocks angeordnet sind. Dies ermöglicht einen besonders einfachen Aufbau des Akkupacks und somit eine besonders einfache Herstellung des Akkupacks. Insbesondere kann der Zellblock mit der Kontaktseite voran, insbesondere entgegen der Verbindungsrichtung, innerhalb des zweiten Akkupackgehäuseteils angeordnet sein oder werden. Zusätzlich oder alternativ kann der Zellblock mit der Kontaktseite durch die Vergussmasse eingeschlossen sein. Weiter zusätzlich oder alternativ kann die Kontaktseite als Vergussseite bezeichnet werden. Weiter zusätzlich oder alternativ kann der Zellblock quaderförmig sein, und insbesondere kann die Kontaktseite eine Quaderseite sein.

In einer Ausgestaltung der Erfindung ist die mindestens eine Leiterplatte, insbesondere nur, auf der Kontaktseite, insbesondere an dem Zellblock, angeordnet, insbesondere mit einer Plattenebene parallel zu der Kontaktseite. Dies ermöglicht einen relativ kompakten Aufbau des Akkupacks. Zugleich ermöglicht dies, dass die Leiterplatte den Zellkontakten besonders nah sein kann. Insbesondere kann an dem Zellblock bedeuten, dass die Leiterplatte maximal 20 mm, insbesondere maximal 10 mm, insbesondere maximal 5 mm, zu dem Zellblock beabstandet angeordnet sein kann.

In einer Weiterbildung der Erfindung sind, insbesondere alle, die Akkumulatorzellen Pouchzellen und, insbesondere alle, die Zellkontakte sind Zelltabs. Dies ermöglicht einen relativ kompakten Aufbau des Akkupacks. Insbesondere können die Pouchzellen Flachzellen sein. Zusätzlich oder alternativ kann eine Fläche der Pouchzellen rechteckig sein. Weiter zusätzlich oder alternativ können die Pouchzellen in dem Stapel, soweit vorhanden, auf- bzw. übereinander angeordnet sein. Weiter zusätzlich oder alternativ können die Pouchzellen, insbesondere jeweils, die Zelltabs an einem gleichen Rand bzw. einer gleichen Kante, insbesondere der Zellhülle, aufweisen. Weiter zusätzlich oder alternativ können die Zelltabs als Kontaktfahnen bezeichnet werden.

In einer Weiterbildung der Erfindung trägt die mindestens eine Leiterplatte Messelektronik. Die Messelektronik ist zur, insbesondere automatischen, Messung von Eigenschaften, insbesondere Werten der Eigenschaften, insbesondere aller, der Akkumulatorzellen ausgebildet bzw. konfiguriert.

Zusätzlich oder alternativ trägt die mindestens eine Leiterplatte Leistungselektronik. Die Leistungselektronik ist zur, insbesondere automatischen, Steuerung, insbesondere Beendigung, der Abgabe der elektrischen Antriebsleistung von dem Akkupack und/oder einer Aufnahme von elektrischer Ladeleistung durch den Akkupack, insbesondere in Abhängigkeit von den gemessenen Eigenschaften, soweit vorhanden, ausgebildet bzw. konfiguriert.

Zusätzlich oder alternativ trägt die mindestens eine Leiterplatte Benutzerschnittstellenelektronik und/oder Übertragungselektronik. Die Benutzerschnittstellenelektronik ist zur, insbesondere automatischen, Interaktion mit einem Benutzer ausgebildet bzw. konfiguriert. Die Übertragungselektronik ist zur, insbesondere automatischen, kabellosen Übertragung von mindestens einem Betriebsparameter und/oder Betriebszustand ausgebildet bzw. konfiguriert.

Die Messelektronik ermöglicht sicherheitskritische Zustände der Akkumulatorzellen zu erfassen.

Die Leistungselektronik ermöglicht sicherheitskritische Zustände der Akkumulatorzellen und somit des Akkupacks gering zu halten oder sogar ganz zu vermeiden.

Insbesondere können die Eigenschaften Spannungen sein. Insbesondere können die Spannungen Mittelspannungen sein.

Die Benutzerschnittstellenelektronik kann zum Ausgeben eines Ladezustands des Akkupacks ausgebildet sein. Zusätzlich oder alternativ kann die Übertragungselektronik zur unidirektionalen oder bidirektionalen Übertragung von dem mindestens einen Betriebsparameter und/oder Betriebszustand ausgebildet sein.

In einer Weiterbildung der Erfindung weist der Akkupack mehrere Akkupackkontakte auf. Die Akkupackkontakte sind zur elektrischen Verbindung des Akkupacks und des Bearbeitungsgeräts miteinander zur Versorgung des Bearbeitungsgeräts mit der elektrischen Antriebsleistung von dem Akkupack ausgebildet bzw. konfiguriert. Des Weiteren sind, insbesondere alle, die Akkupackkontakte, insbesondere nur, an einem dem zweiten Akkupackgehäuseteil, insbesondere maximal, entfernten Ende des ersten Akkupackgehäuseteils angeordnet. Dies ermöglicht, dass die Akkupackkontakte nicht durch die Vergussmasse eingeschlossen sein brauchen oder können. Insbesondere können die Akkupackkontakte spannungsführend sein, insbesondere spannungsführende Oberflächen aufweisen. Zusätzlich oder alternativ kann an dem entfernten Ende des ersten Akkupackgehäuseteils angeordnet bedeuten, dass die Akkupackkontakte maximal 20 mm, insbesondere maximal 10 mm, insbesondere maximal 5 mm, zu dem entfernten Ende des ersten Akkupackgehäuseteils beabstandet angeordnet sein können. Weiter zusätzlich oder alternativ können die Akkupackkontakte auf einer der Kontaktseite gegenüberliegenden Seite des Zellblocks, soweit vorhanden, angeordnet sein.

In einer Weiterbildung der Erfindung weist das andere Akkupackgehäuseteil, insbesondere das erste Akkupackgehäuseteil, mindestens eine Nut, insbesondere zur Führung des Akkupacks bei mechanischer Verbindung mit dem Bearbeitungsgerät, auf. Die Nut verläuft an der Kopfanlagefläche in Verlängerung des Gewindes. Dies ermöglicht die Schraube in der Nut anzuordnen und von dort in das Gewinde einzuschrauben. Insbesondere kann die Nut an die Kopfanlagefläche anschließen. Zusätzlich oder alternativ kann die Nut in der Verbindungsrichtung verlaufen. Weiter zusätzlich oder alternativ kann die Nut von außerhalb des Akkupackgehäuses zugänglich sein.

Insbesondere kann das zweite Akkupackgehäuseteil das Gewinde aufweisen und das erste Akkupackgehäuseteil kann die Kopfanlagefläche, und insbesondere die Nut, aufweisen. Somit braucht relativ wenig Baulänge für die Schraube in dem ersten Akkupackgehäuseteil vorgesehen sein und somit für die Nut und/oder, insbesondere bei vorgegebener Nutlänge und bei vorgegebener Akkupackgehäuselänge, für eine relativ große Länge des zweiten Akkupackgehäuseteils, insbesondere in der Verbindungsrichtung, und somit für relativ viel Vergussmasse innerhalb des zweiten Akkupackgehäuseteils genutzt werden.

In einer Weiterbildung der Erfindung weist das erste Akkupackgehäuseteil eine Anzahl von Luftöffnungen, insbesondere eine Anzahl von Lufteinlassöffnungen, auf. Die Anzahl von Luftöffnungen ist an einem dem zweiten Akkupackgehäuseteil benachbarten bzw. nahen Ende des ersten Akkupackgehäuseteils, insbesondere zwischen zwei Nuten, soweit vorhanden, angeordnet. Dies ermöglicht, dass Kühlluft zur Kühlung der Akkumulatorzellen, insbesondere der Zellhüllen, relativ lang an den Akkumulatorzellen vorbeiströmen kann, insbesondere wenn das zweite Akkupackgehäuseteil das Gewinde aufweisen kann und das erste Akkupackgehäuseteil die Kopfanlagefläche, und insbesondere die Nut, aufweisen kann. Insbesondere braucht oder kann die Vergussmasse nicht bis zu der Anzahl von Luftöffnungen hinreichen. Zusätzlich oder alternativ kann der erste Akkupackgehäuseteil eine weitere Anzahl von Luftöffnungen, insbesondere eine Anzahl von Luftauslassöffnungen, an einem dem zweiten Akkupackgehäuseteil entfernten Ende des ersten Akkupackgehäuseteils angeordnet für eine Kühlluftströmung von der einen Anzahl von Luftöffnungen, insbesondere Anzahl von Lufteinlassöffnungen, an den Akkumulatorzellen vorbei zu der anderen Anzahl von Luftöffnungen, insbesondere Anzahl von Luftauslassöffnungen, zur Kühlung der Akkumulatorzellen aufweisen. Weiter zusätzlich oder alternativ kann an dem benachbarten Ende des ersten Akkupackgehäuseteils angeordnet bedeuten, dass die Anzahl von Luftöffnungen maximal 20 mm, insbesondere maximal 10 mm, insbesondere maximal 5 mm, zu dem benachbarten Ende des ersten Akkupackgehäuseteils beabstandet angeordnet sein kann.

In einer Weiterbildung der Erfindung weist der Akkupack, insbesondere weisen die Akkumulatorzellen, eine maximale elektrische Antriebsleistung von minimal 1 Kilowatt (kW), insbesondere von minimal 2 kW, und/oder von maximal 10 kW, insbesondere von maximal 5 kW, auf.

Zusätzlich oder alternativ weist der Akkupack, insbesondere weisen die Akkumulatorzellen, eine, insbesondere elektrische, Nennspannung von minimal 10 Volt (V), insbesondere von minimal 20 V, und/oder von maximal 100 V, insbesondere von maximal 50 V, auf.

Zusätzlich oder alternativ weist der Akkupack, insbesondere weisen die Akkumulatorzellen, einen, insbesondere elektrischen, maximalen Energieinhalt von minimal 100 Wattstunden (Wh), insbesondere von minimal 200 Wh, und/oder von maximal 1000 Wh, insbesondere von maximal 500 Wh, auf.

Zusätzlich oder alternativ weist der Akkupack eine Masse von minimal 0,5 Kilogramm (kg), insbesondere von minimal 1 kg, und/oder von maximal 10 kg, insbesondere von maximal 5 kg, auf.

Zusätzlich oder alternativ weist der Akkupack, insbesondere das Akkupackgehäuse, eine Höhe von minimal 2,5 Zentimeter (cm) und/oder von maximal 10 cm, und/oder eine Breite von minimal 5 cm und/oder von maximal 20 cm, und/oder eine Tiefe bzw. Länge, insbesondere in der Verbindungsrichtung, von minimal 7,5 cm und/oder von maximal 30 cm auf.

Das erfindungsgemäße Bearbeitungssystem weist einen, insbesondere den, Akkupack wie zuvor beschrieben und ein, insbesondere das, elektrisch angetriebenes Bearbeitungsgerät auf.

Der Akkupack und das Bearbeitungsgerät sind zur elektrischen Verbindung miteinander zur, insbesondere automatischen, Versorgung des Bearbeitungsgeräts mit elektrischer Antriebsleistung von dem Akkupack ausgebildet bzw. konfiguriert.

Insbesondere kann das Bearbeitungssystem ein Garten-, Forst- und/oder Baubearbeitungssystem sein. Zusätzlich oder alternativ kann das Bearbeitungsgerät ein Garten-, Forst- und/oder Baubearbeitungsgerät sein. Weiter zusätzlich oder alternativ kann das Bearbeitungsgerät ein handgeführtes, insbesondere bodengeführtes oder handgetragenes, Bearbeitungsgerät sein. Insbesondere handgeführtes, insbesondere handgetragenes, Bearbeitungsgerät kann bedeuten, dass das Bearbeitungsgerät eine maximale Masse von 50 Kilogramm (kg), insbesondere von 20 kg, insbesondere von 10 kg, aufweisen kann. Weiter zusätzlich oder alternativ kann das Bearbeitungsgerät einen Elektroantriebsmotor aufweisen. Weiter zusätzlich oder alternativ können der Akkupack und das Bearbeitungsgerät zur, insbesondere werkzeugfrei und/oder zerstörungsfrei, lösbaren elektrischen Verbindung miteinander ausgebildet sein, insbesondere mittels Steckverbinder. Weiter zusätzlich oder alternativ können der Akkupack und das Bearbeitungsgerät zur, insbesondere lösbaren, insbesondere werkzeugfrei und/oder zerstörungsfrei lösbaren, mechanischen Verbindung miteinander ausgebildet sein. Insbesondere kann das Bearbeitungsgerät zum Tragen des Akkupacks ausgebildet sein.

In einer Weiterbildung der Erfindung weist das Bearbeitungsgerät eine Akkuaufnahme, insbesondere einen Akkuschacht, auf. Die Akkuaufnahme ist zum Aufnehmen des Akkupacks ausgebildet bzw. konfiguriert.

In einer Weiterbildung der Erfindung ist das Bearbeitungsgerät eine Säge, ein Hoch-Entaster, ein Freischneider, eine Heckenschere, ein Heckenschneider, ein Blasgerät, ein Laubbläser, eine Astschere, ein Trennschleifer, ein Kehrgerät, eine Kehrwalze, eine Kehrbürste, ein Rasenmäher, ein Vertikutierer oder eine Grasschere.

Das erfindungsgemäße Verfahren zur Herstellung eines, insbesondere des, Akkupacks, insbesondere wie zuvor beschrieben, zur Versorgung eines, insbesondere des, elektrisch angetriebenen Bearbeitungsgeräts mit elektrischer Antriebsleistung weist die Schritte auf: a) Anordnen von, insbesondere den, Zellkontakten, insbesondere der, mehrerer Akkumulatorzellen und, insbesondere der, mindestens einer Leiterplatte, wobei die mindestens eine Leiterplatte mit den Zellkontakten elektrisch verbunden ist, innerhalb eines, insbesondere des, zweiten Akkupackgehäuseteils eines, insbesondere des, Akkupackgehäuses, wobei das zweite Akkupackgehäuseteil als Gießform für eine, insbesondere die, Vergussmasse ausgebildet ist. b) Einschließen der Zellkontakte und der mindestens einen Leiterplatte durch die Vergussmasse, insbesondere zeitlich nach dem Schritt a). c) Anordnen der Akkumulatorzellen innerhalb des Akkupackgehäuses und Verschließen des zweiten Akkupackgehäuseteils und eines, insbesondere des, ersten Akkupackgehäuseteils des Akkupackgehäuses durcheinander, insbesondere zeitlich nach dem Schritt b).

Das Verfahren kann die gleichen Vorteile ermöglichen wie der zuvor beschriebene Akkupack.

Insbesondere können im Schritt a) und/oder im Schritt b) das erste Akkupackgehäuseteil und das zweite Akkupackgehäuseteil voneinander entfernt sein bzw. brauchen nicht durcheinander verschlossen sein. Zusätzlich oder alternativ kann der Schritt b) aufweisen: Eingießen bzw. Zuführen der Vergussmasse innerhalb des zweiten Akkupackgehäuseteils, insbesondere in einem flüssigen Zustand. Weiter zusätzlich oder alternativ kann der Schritt c) aufweisen: Anordnen der Akkumulatorzellen innerhalb des ersten Akkupackgehäuseteils.

In einer Weiterbildung der Erfindung weist der Schritt c) auf: Anordnen und Verschließen während die Vergussmasse in einem flüssigen Zustand ist. Das Verfahren weist den Schritt auf: d) Härten der Vergussmasse in einen festen Zustand, insbesondere zeitlich nach dem Schritt c). Dies kann ein Vergießen bzw. Abdichten und/oder Versiegeln des Akkupackgehäuses, insbesondere einer Trenn- bzw. Schnittstelle zwischen dem ersten Akkupackgehäuseteil und dem zweiten Akkupackgehäuseteil, und/oder eine zusätzliche mechanische Verbindung des ersten Akkupackgehäuseteils und des zweiten Akkupackgehäuseteils miteinander ermöglichen. Zusätzlich oder alternativ kann dies ein Ausgleichen von Fertigungs- bzw. Herstellungstoleranzen des ersten Akkupackgehäuseteils und/oder des zweiten Akkupackgehäuseteils ermöglichen, insbesondere im Unterschied zu einem Anordnen und Verschließen während die Vergussmasse in einem festen Zustand sein kann.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind. Dabei zeigen:
- Fig. 1: eine Perspektivansicht eines erfindungsgemäßen Bearbeitungssystems aufweisend einen erfindungsgemäßen Akkupack und ein elektrisch angetriebenes Bearbeitungsgerät in Form einer Säge, eines Trennschleifers und eines Blasgeräts,
- Fig. 2: eine Explosionsansicht des Akkupacks der Fig. 1,
- Fig. 3: eine Perspektivansicht eines ersten Stapelgehäuseteils eines Stapelgehäuses des Akkupacks der Fig. 1,
- Fig. 4: eine Perspektivansicht des ersten Stapelgehäuseteils, von Akkumulatorzellen, eines Drucksensors und eines inneren Temperatursensors des Akkupacks der Fig. 1,
- Fig. 5: eine Perspektivansicht des ersten Stapelgehäuseteils, von Akkumulatorzellen, des Drucksensors und des inneren Temperatursensors angeordnet in einem Stapel des Akkupacks der Fig. 1,
- Fig. 6: eine Perspektivansicht des ersten Stapelgehäuseteils, des Stapels und eines zweiten Stapelgehäuseteils des Stapelgehäuses des Akkupacks der Fig. 1,
- Fig. 7: eine Perspektivansicht des ersten Stapelgehäuseteils, des Stapels, des zweiten Stapelgehäuseteils und einer Leiterplatte des Akkupacks der Fig. 1,
- Fig. 8: eine Perspektivansicht des ersten Stapelgehäuseteils, des Stapels, des zweiten Stapelgehäuseteils, der Leiterplatte, einer weiteren Leiterplatte und einer nochmals weiteren Leiterplatte des Akkupacks der Fig. 1,
- Fig. 9: eine Perspektivansicht von einer Rückseite des ersten Stapelgehäuseteils, des Stapels, des zweiten Stapelgehäuseteils, der Leiterplatte, der weiteren Leiterplatte, der nochmals weiteren Leiterplatte und eines äußeren Temperatursensors des Akkupacks der Fig. 1,
- Fig. 10: eine Perspektivansicht des äußeren Temperatursensors des Akkupacks der Fig. 1,
- Fig. 11: eine Schnittansicht der Akkumulatorzellen, der Leiterplatte, der weiteren Leiterplatte, der nochmals weiteren Leiterplatte und eines zweiten Akkupackgehäuseteils eines Akkupackgehäuses des Akkupacks der Fig. 1 und eines erfindungsgemäßen Verfahrens,
- Fig. 12: eine Schnittansicht der Akkumulatorzellen, der Leiterplatte, der weiteren Leiterplatte, der nochmals weiteren Leiterplatte und des zweiten Akkupackgehäuseteils des Akkupacks der Fig. 1 aufweisend Vergussmasse und des erfindungsgemäßen Verfahrens,
- Fig. 13: eine Schnittansicht der Akkumulatorzellen, der Leiterplatte, der weiteren Leiterplatte, der nochmals weiteren Leiterplatte, des zweiten Akkupackgehäuseteils und eines ersten Akkupackgehäuseteils des Akkupackgehäuses des Akkupacks der Fig. 1 aufweisend die Vergussmasse und des erfindungsgemäßen Verfahrens,
- Fig. 14: eine weitere Schnittansicht der Akkumulatorzellen, der Leiterplatte, der weiteren Leiterplatte, der nochmals weiteren Leiterplatte, des zweiten Akkupackgehäuseteils und des ersten Akkupackgehäuseteils des Akkupacks der Fig. 1 aufweisend die Vergussmasse und des erfindungsgemäßen Verfahrens,
- Fig. 15: eine nochmals weitere Schnittansicht der Akkumulatorzellen, der Leiterplatte, der weiteren Leiterplatte, der nochmals weiteren Leiterplatte, des zweiten Akkupackgehäuseteils und des ersten Akkupackgehäuseteils des Akkupacks der Fig. 1 aufweisend die Vergussmasse und des erfindungsgemäßen Verfahrens,
- Fig. 16: eine Perspektivansicht des Akkupackgehäuses des Akkupacks der Fig. 1, und
- Fig. 17: eine alternative Anordnung des ersten Akkupackgehäuseteils und des zweiten Akkupackgehäuseteils des Akkupacks der Fig. 1.

### DETAILLIERTE BESCHREIBUNG DER AUSFÜHRUNGSBEISPIELE

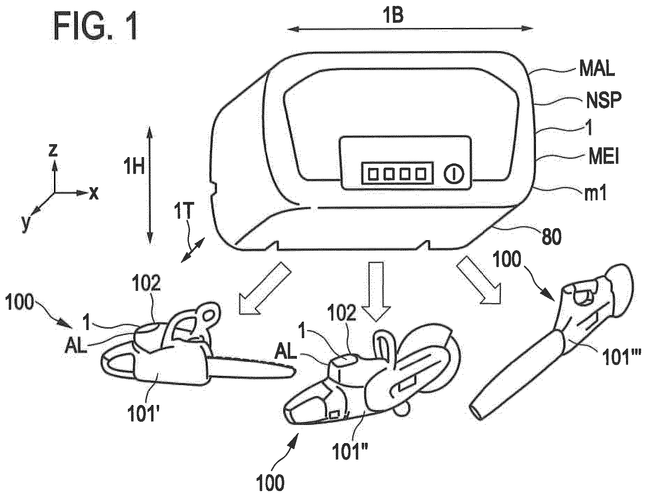

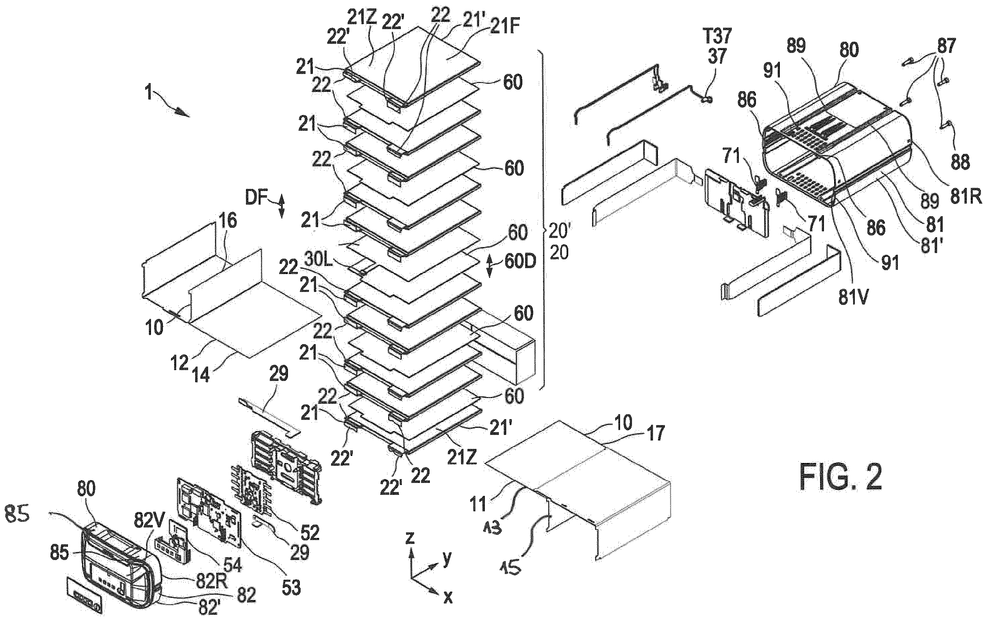

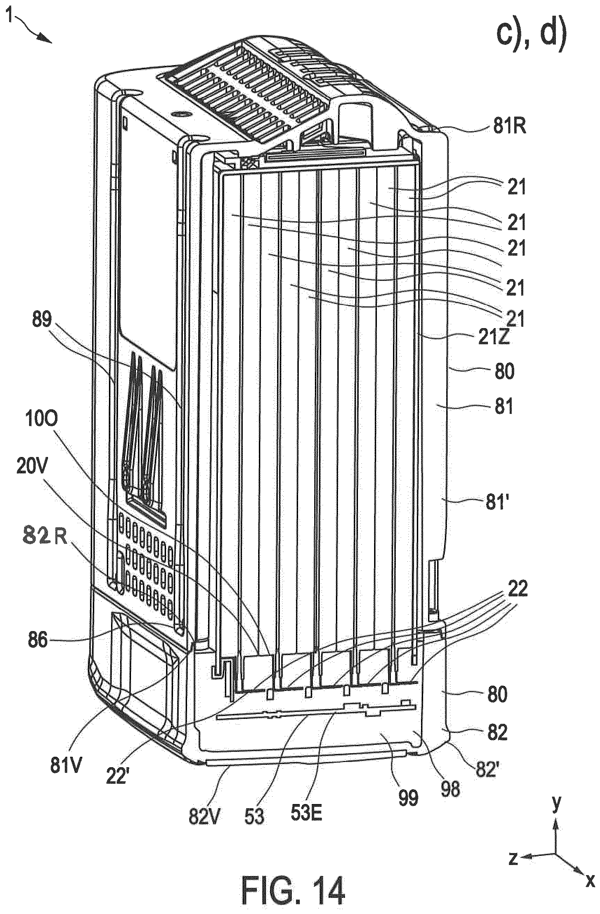

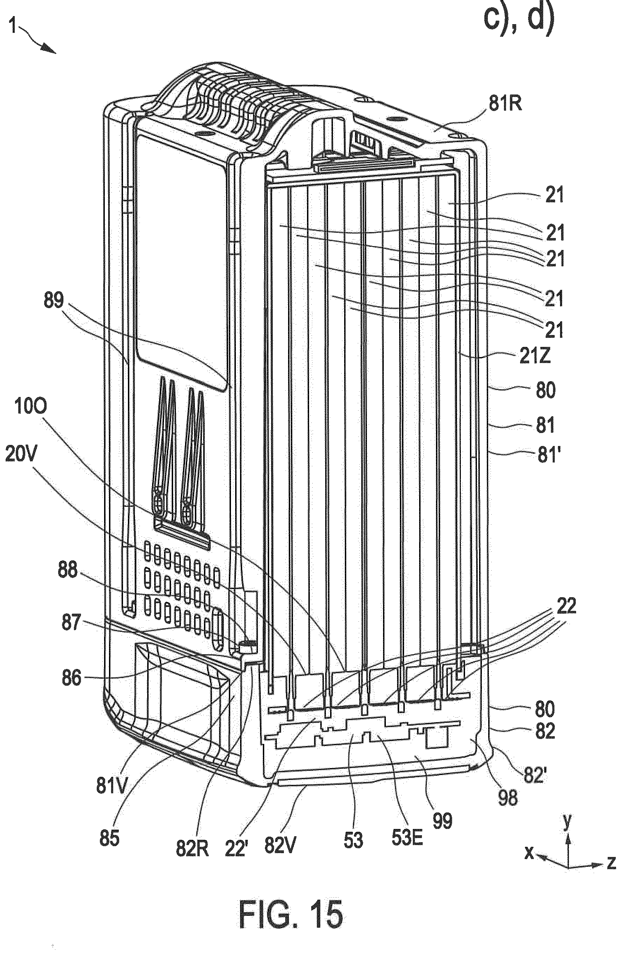

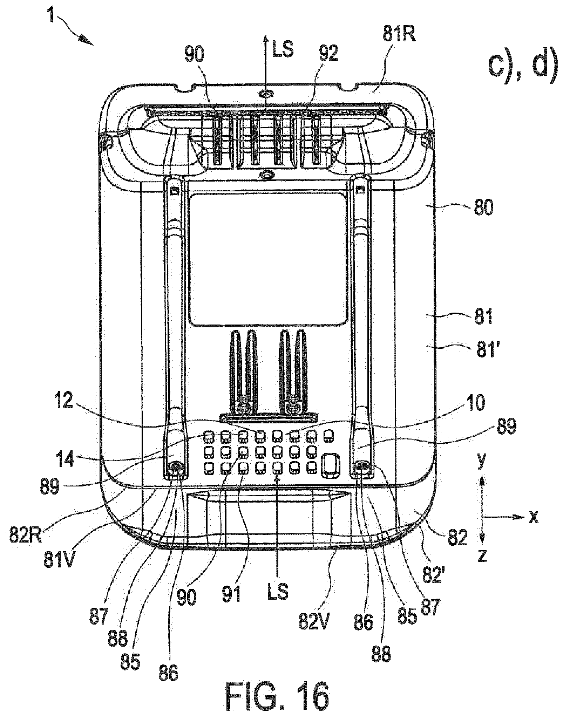

Fig. 1 bis 17 zeigen einen erfindungsgemäßen Akkupack 1 zur Versorgung eines elektrisch angetriebenen Bearbeitungsgeräts 101 mit elektrischer Antriebsleistung AL und ein erfindungsgemäßes Verfahren zur Herstellung des Akkupacks 1 zur Versorgung des elektrisch angetriebenen Bearbeitungsgeräts 101 mit elektrischer Antriebsleistung AL.

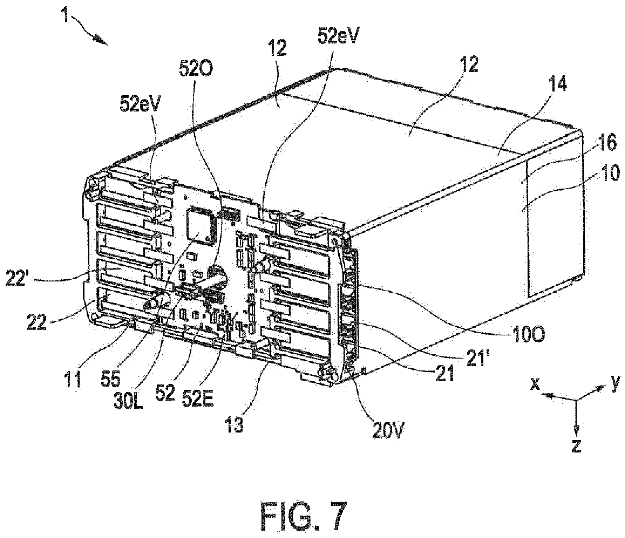

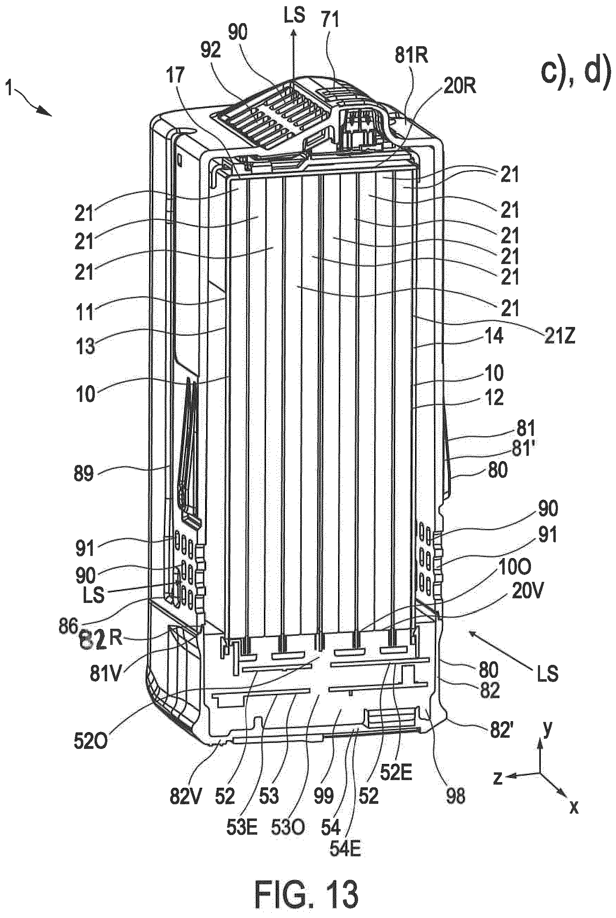

Der Akkupack 1 weist mehrere Akkumulatorzellen 21, mindestens eine Leiterplatte 52, 53, 54 und ein Akkupackgehäuse 80 auf. Die Akkumulatorzellen 21 weisen Zellkontakte 22 auf. Die mindestens eine Leiterplatte 52, 53, 54 ist mit den Zellkontakten 22 elektrisch verbunden, wie in Fig. 7, 14 und 15 gezeigt. Das Akkupackgehäuse 80 weist ein erstes Akkupackgehäuseteil 81 und ein zweites Akkupackgehäuseteil 82 auf. Das erste Akkupackgehäuseteil 81 und das zweite Akkupackgehäuseteil 81 sind durcheinander verschlossen, wie in Fig. 13 bis 17 gezeigt. Die Akkumulatorzellen 21 sind innerhalb des Akkupackgehäuses 80 angeordnet.

Zusätzlich sind die Zellkontakte 22 und die mindestens eine Leiterplatte 52, 53, 54 innerhalb des zweiten Akkupackgehäuseteils 82 angeordnet, wie in Fig. 13 bis 15 gezeigt. Das zweite Akkupackgehäuseteil 82 ist als Gießform für eine Vergussmasse 99 ausgebildet. Die Zellkontakte 22 und die mindestens eine Leiterplatte 52, 53, 54 sind durch die Vergussmasse 99 eingeschlossen.

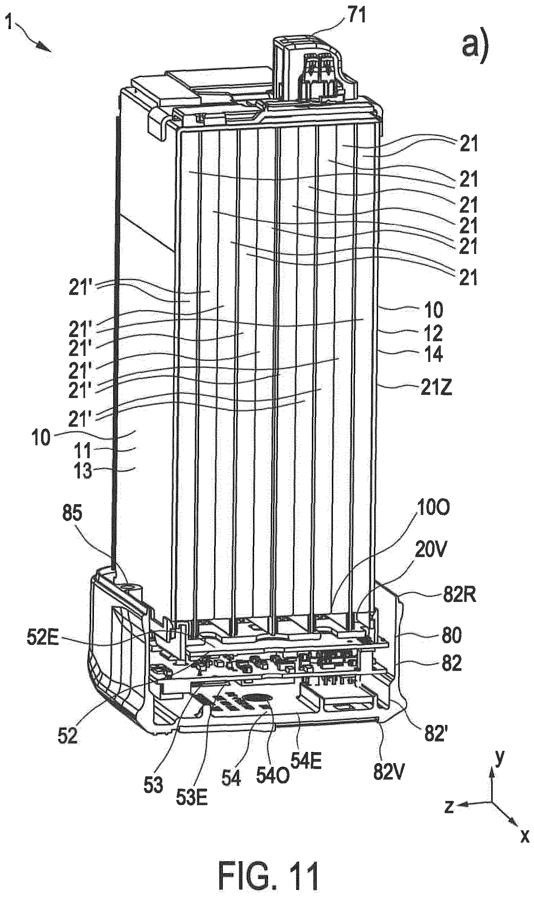

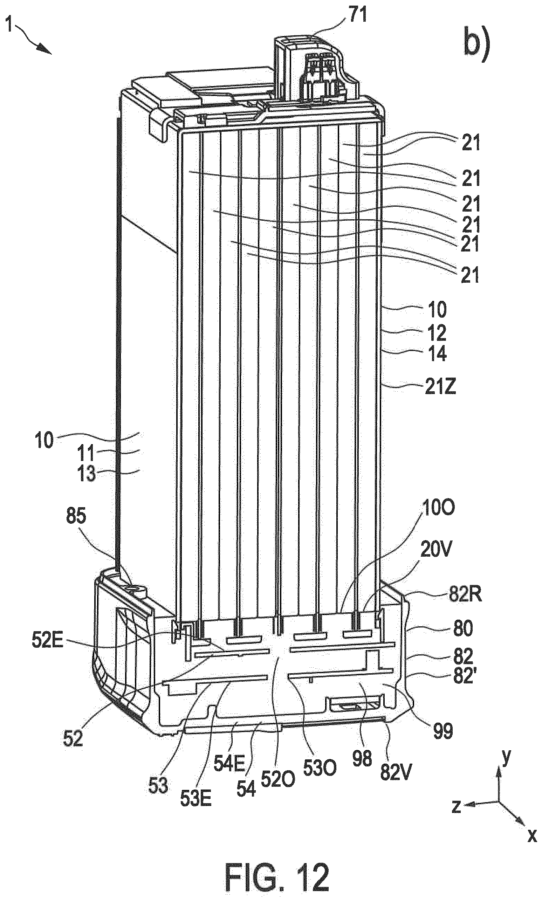

Zusätzlich ist die mindestens eine Leiterplatte 52, 53, 54 innerhalb des Akkupackgehäuses 80, insbesondere zweiten Akkupackgehäuseteils 82, angeordnet. Das eine Akkupackgehäuseteil 82, im gezeigten Ausführungsbeispiel das zweite Akkupackgehäuseteil 82, weist mindestens ein Gewinde 85 auf, wie in Fig. 11 und 12 gezeigt. Das andere Akkupackgehäuseteil 81, im gezeigten Ausführungsbeispiel das erste Akkupackgehäuseteil 81, weist mindestens eine Kopfanlagefläche 86 auf, wie in Fig. 13 bis 16 gezeigt. Die Kopfanlagefläche 86 ist an einem dem einen Akkupackgehäuseteil 82 benachbarten Ende 81V des anderen Akkupackgehäuseteils 81 angeordnet. Der Akkupack 1 weist mindestens eine Schraube 87 auf. Die Schraube 87 ist zur mechanischen Verbindung des einen Akkupackgehäuseteils 82 und des anderen Akkupackgehäuseteils 81 miteinander in das Gewinde 85 eingeschraubt und liegt mit einem Schraubenkopf 88 an der Kopfanlagefläche 86 an.

Das Verfahren weist die Schritte auf: a) Anordnen von den Zellkontakten 22 der mehreren Akkumulatorzellen 21 und der mindestens einen Leiterplatte 52, 53, 54, wobei die mindestens eine Leiterplatte 52, 53, 54 mit den Zellkontakten 22 elektrisch verbunden ist, innerhalb des zweiten Akkupackgehäuseteils 82 des Akkupackgehäuses 80, wobei das zweite Akkupackgehäuseteil 82 als Gießform für die Vergussmasse 99 ausgebildet ist, wie in Fig. 11 gezeigt. b) Einschließen der Zellkontakte 22 und der mindestens einen Leiterplatte 52, 53, 54 durch die Vergussmasse 99, wie in Fig. 12 gezeigt. c) Anordnen der Akkumulatorzellen 21 innerhalb des Akkupackgehäuses 80, insbesondere des ersten Akkupackgehäuseteils 81, und Verschließen des zweiten Akkupackgehäuseteils 82 und des ersten Akkupackgehäuseteils 81 des Akkupackgehäuses 80 durcheinander, wie in Fig. 13 bis 16 gezeigt.

Im gezeigten Ausführungsbeispiel weist der Akkupack 1 zehn Akkumulatorzellen 21 auf. In alternativen Ausführungsbeispielen kann der Akkupack mindestens zwei Akkumulatorzellen aufweisen.

Des Weiteren weist im gezeigten Ausführungsbeispiel der Akkupack 1 drei Leiterplatten 52, 53, 54. In alternativen Ausführungsbeispielen kann der Akkupack, insbesondere nur, eine, insbesondere einzige, zwei oder mindestens vier Leiterplatten aufweisen.

Insbesondere sind die Zellkontakte 22 und die mindestens eine Leiterplatte 52, 53, 54 spannungsführend, insbesondere weisen spannungsführende Oberflächen auf. Die Vergussmasse 99 ist elektrisch isolierend, und insbesondere wärmeleitfähig.

Außerdem weist im gezeigten Ausführungsbeispiel das eine Akkupackgehäuseteil 82 vier Gewinde 85 auf, das andere Akkupackgehäuseteil 81 weist vier Kopfanlageflächen 86 auf und der Akkupack 1 weist vier Schrauben 87 auf. In alternativen Ausführungsbeispielen kann das eine Akkupackgehäuseteil, insbesondere nur, ein, insbesondere einziges, zwei, drei oder mindestens fünf Gewinde aufweisen, das andere Akkupackgehäuseteil kann, insbesondere nur, eine, insbesondere einzige, zwei, drei oder mindestens fünf Kopfanlageflächen aufweisen und der Akkupack kann, insbesondere nur, eine, insbesondere einzige, zwei, drei oder mindestens fünf Schrauben aufweisen.

Weiter kann in alternativen Ausführungsbeispielen das erste Akkupackgehäuseteil mindestens ein Gewinde aufweisen und das zweite Akkupackgehäuseteil kann mindestens eine Kopfanlagefläche aufweisen, wobei die Kopfanlagefläche an einem dem ersten Akkupackgehäuseteil benachbarten Ende des zweiten Akkupackgehäuseteils angeordnet sein kann.

Insbesondere weist das eine Akkupackgehäuseteil 82 mindestens ein Sackloch auf, wobei das Sackloch das Gewinde 85 aufweist. Das andere Akkupackgehäuseteil 81 weist ein Durchgangsloch auf, wobei das Durchgangsloch die Kopfanlagefläche 86 aufweist und die Schraube 87 durch das Durchgangsloch zu dem Gewinde 85 geführt ist.

Zudem sind im gezeigten Ausführungsbeispiel im Schritt a) und im Schritt b) das erste Akkupackgehäuseteil 81 und das zweite Akkupackgehäuseteil 82 voneinander entfernt bzw. nicht durcheinander verschlossen.

Des Weiteren weist im gezeigten Ausführungsbeispiel der Schritt b) auf: Eingießen der Vergussmasse 99 innerhalb des zweiten Akkupackgehäuseteils 82, insbesondere in einem flüssigen Zustand.

Insbesondere ist im Schritt b) und im Schritt c) das zweite Akkupackgehäuseteil 82 mit einer Öffnung nach oben ausgerichtet, wie in Fig. 12 bis 17 gezeigt, insbesondere dass die Vergussmasse 99 in dem flüssigen Zustand nicht aus dem zweiten Akkupackgehäuseteil 82 herausfließen kann.

Außerdem weist im gezeigten Ausführungsbeispiel der Schritt c) auf: Anordnen der Akkumulatorzellen 21 innerhalb des ersten Akkupackgehäuseteils 81.

Insbesondere ist im Schritt c) und zeitlich danach eine Öffnung des ersten Akkupackgehäuseteils 81 dem zweiten Akkupackgehäuseteil 82 zugewandt und die Öffnung des zweiten Akkupackgehäuseteils 82 ist dem ersten Akkupackgehäuseteil 81 zugewandt. Das erste Akkupackgehäuseteil 81 und das zweite Akkupackgehäuseteil 82 schließen in einer Verbindungsrichtung y aneinander an bzw. berühren sich.

Zudem weist im gezeigten Ausführungsbeispiel das Verfahren den Schritt auf: Einschrauben der Schraube 87 zur mechanischen Verbindung des einen Akkupackgehäuseteils 82 und des anderen Akkupackgehäuseteils 81 miteinander in das Gewinde 85 bis die Schraube 87 mit dem Schraubenkopf 88 an der Kopfanlagefläche 86 anliegt, insbesondere zeitlich nach dem Schritt c).

Insbesondere verlaufen das Gewinde 85 und die Schraube 87 in der Verbindungsrichtung y.

Im Detail ist das erste Akkupackgehäuseteil **81'** ein Gehäusebehälter **81'** und das zweite Akkupackgehäuseteil 82 ist ein Gehäusedeckel 82'.

Im gezeigten Ausführungsbeispiel weisen die Akkumulatorzellen 21 Zellhüllen 21Z auf.

Insbesondere sind die Zellkontakte 22 und die Zellhüllen 21Z, insbesondere jeweils, voneinander elektrisch isoliert.

Die Zellhüllen 21Z sind innerhalb des Gehäusebehälters 82' angeordnet.

Des Weiteren reicht die Vergussmasse 99, insbesondere eine Füllhöhe bzw. ein Gießspiegel der Vergussmasse 99, mindestens bis zu den Zellhüllen 21Z hin, insbesondere nach oben und/oder in der Verbindungsrichtung y, wie in Fig. 12 bis 15 und 17 gezeigt.

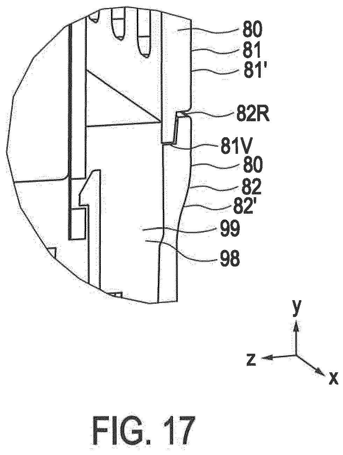

Zusätzlich reicht in Fig. 17 die Vergussmasse 99, insbesondere die Füllhöhe der Vergussmasse 99, insbesondere genau, bis zu einem dem ersten Akkupackgehäuseteil 81 benachbarten Ende 82R des zweiten Akkupackgehäuseteils 82 hin, insbesondere nach oben und/oder in der Verbindungsrichtung y.

Zusätzlich reicht in Fig. 17 die Vergussmasse 99, insbesondere die Füllhöhe der Vergussmasse 99, mindestens bis zu dem benachbarten Ende 81V des ersten Akkupackgehäuseteils 81 hin, insbesondere nach oben und/oder in der Verbindungsrichtung y.

Im Detail überdeckt in Fig. 13 bis 16 das erste Akkupackgehäuseteil 81 außen das zweite Akkupackgehäuseteil 82 innen.

In Fig. 17 überdeckt das zweite Akkupackgehäuseteil 82 außen das erste Akkupackgehäuseteil 81 innen. Somit ist die Vergussmasse 99 zwischen dem zweiten Akkupackgehäuseteil 82 und dem ersten Akkupackgehäuseteil 81 angeordnet. Somit dichtet die Vergussmasse 99 das Akkupackgehäuse 80, insbesondere eine Trenn- bzw. Schnittstelle zwischen dem ersten Akkupackgehäuseteil 81 und dem zweiten Akkupackgehäuseteil 82, ab und verbindet das erste Akkupackgehäuseteil 81 und das zweite Akkupackgehäuseteil 82 mechanisch miteinander.

Außerdem weist der Schritt c) auf: Anordnen und Verschließen während die Vergussmasse 99 in dem flüssigen Zustand ist. Das Verfahren weist den Schritt auf: d) Härten der Vergussmasse 99 in einen festen Zustand.

Insbesondere ist im Schritt d) das zweite Akkupackgehäuseteil 82 mit der Öffnung nach oben ausgerichtet, wie in Fig. 12 bis 17 gezeigt, insbesondere dass die Vergussmasse 99 in dem flüssigen Zustand nicht aus dem zweiten Akkupackgehäuseteil 82 herausfließen kann.

Im Detail taucht in Fig. 17 im Schritt c) das erste Akkupackgehäuseteil 81 mit dem benachbarten Ende 81V in die Vergussmasse 99 in dem flüssigen Zustand ein, insbesondere nach unten und/oder entgegen der Verbindungsrichtung y.

Weiter sind die Zellkontakte 22 und die mindestens eine Leiterplatte 52, 53, 54 durch die Vergussmasse 99 in einem gemeinsamen Vergussblock 98 eingeschlossen.

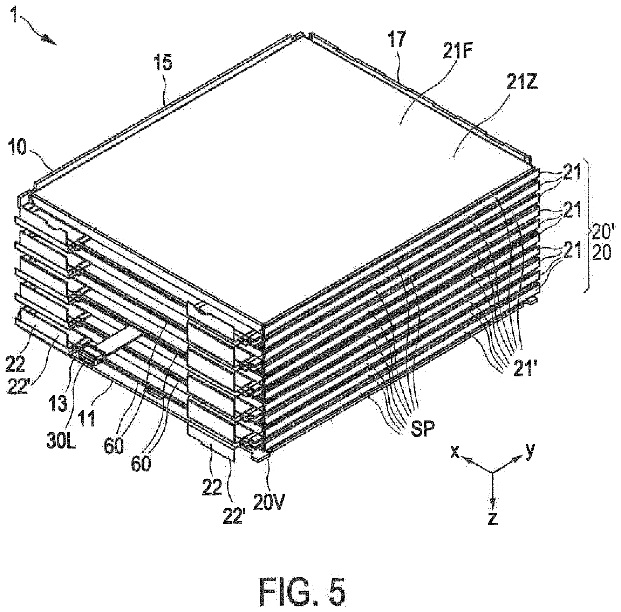

Zudem sind die Akkumulatorzellen 21 derart ausgebildet und in einem Zellblock 20, insbesondere einem Stapel 20', angeordnet, dass die Zellkontakte 22 auf einer gemeinsamen Kontaktseite, insbesondere Vorderseite, 20V des Zellblocks 20 angeordnet sind, wie in Fig. 5 gezeigt.

Im gezeigten Ausführungsbeispiel ist der Zellblock 20 mit der Kontaktseite 20V voran, insbesondere entgegen der Verbindungsrichtung y, innerhalb des zweiten Akkupackgehäuseteils 82 angeordnet und/oder die Kontaktseite 20V ist orthogonal zu der Verbindungsrichtung y, wie in Fig. 11 bis 15 gezeigt.

Im Detail ist die mindestens eine Leiterplatte 52, 53, 54 auf der Kontaktseite, insbesondere Vorderseite, 20V angeordnet, insbesondere mit einer Plattenebene 52E, 53E, 54E parallel zu der Kontaktseite 20V, wie in Fig. 7, 8 und 11 bis 15 gezeigt.

Des Weiteren sind die Akkumulatorzellen 21 Pouchzellen 21' und die Zellkontakte 22 sind Zelltabs 22'.

Im gezeigten Ausführungsbeispiel sind die Pouchzellen 21' in dem Stapel 20' in einer, insbesondere zu der Verbindungsrichtung orthogonalen, Stapelrichtung z angeordnet.

Außerdem sind im gezeigten Ausführungsbeispiel die Zelltabs 22', insbesondere jeweils, nächster Pouchzellen 21' durch eine stoffschlüssige Verbindung, insbesondere eine Schweißverbindung, miteinander, insbesondere unmittelbar, elektrisch verbunden. Insbesondere sind die Pouchzellen 21' seriell geschaltet, insbesondere in der Stapelrichtung z.

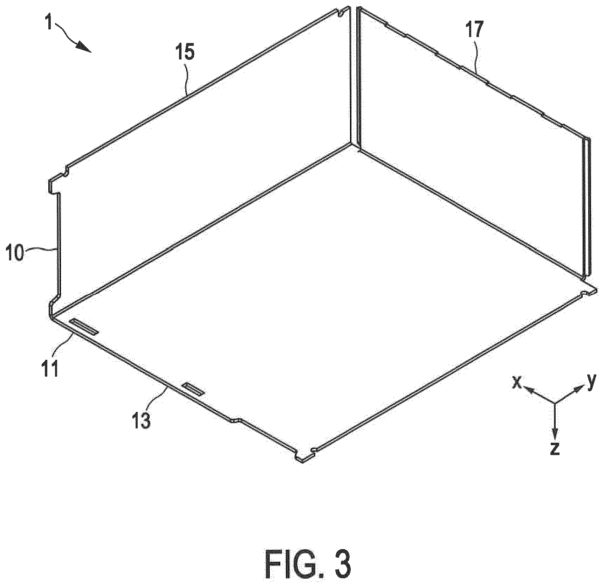

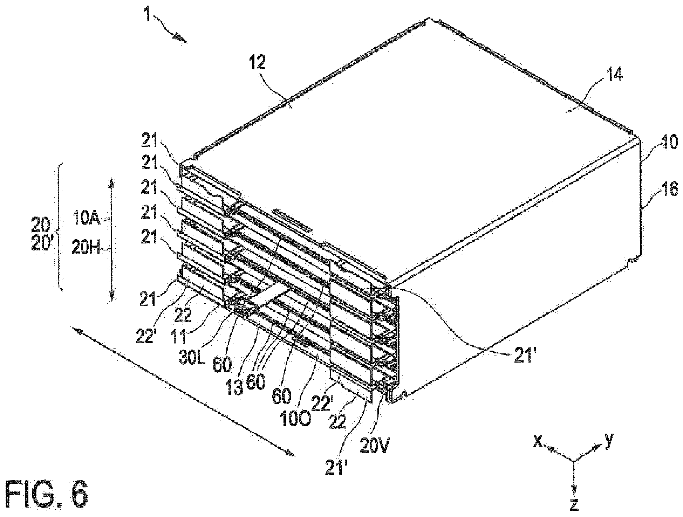

Weiter weist im gezeigten Ausführungsbeispiel der Akkupack 1 ein, insbesondere massives, Stapelgehäuse, 10 auf. Das Stapelgehäuse 10 weist ein erstes Stapelgehäuseteil 11, wie in Fig. 3 gezeigt, und ein zweites Stapelgehäuseteil 12, wie in Fig. 6 gezeigt auf. Der Stapel 20' ist zwischen dem ersten Stapelgehäuseteil 11 und dem zweiten Stapelgehäuseteil 12 angeordnet. Das erste Stapelgehäuseteil 11 und das zweite Stapelgehäuseteil 12 sind durch mindestens eine stoffschlüssige Verbindung, insbesondere eine Schweißverbindung, miteinander, insbesondere unmittelbar, mechanisch verbunden, wie in Fig. 7 gezeigt.

Im Detail weist das erste Stapelgehäuseteil 11 eine erste Stapelgehäusewand 13 auf. Das zweite Stapelgehäuseteil 12 weist eine zweite Stapelgehäusewand 14 auf. Die zweite Stapelgehäusewand 14 ist zu der ersten Stapelgehäusewand 13 mit einem, insbesondere festen, Abstand 10A, insbesondere in der Stapelrichtung z, gegenüberliegend angeordnet, wie in Fig. 6 gezeigt. Der Stapel 20' ist zwischen der ersten Stapelgehäusewand 13 und der zweiten Stapelgehäusewand 14 angeordnet. Eine Höhe 20H des Stapels 20', insbesondere in der Stapelrichtung z, ist durch die Stapelgehäusewand 13 und die zweite Stapelgehäusewand 14, insbesondere ihren Abstand 10A, begrenzt.

Zudem ist das Stapelgehäuse 10 quaderförmig und weist mindestens vier, im gezeigten Ausführungsbeispiel fünf, Stapelgehäusewände 13, 14, 15, 16, 17 auf. Das erste Stapelgehäuseteil 11 weist die erste Stapelgehäusewand bzw. Oberseitenwand 13, die Stapelgehäusewand, insbesondere Umfangsseitenwand, 15 und die Stapelgehäusewand, insbesondere die Rückseitenwand, 17 auf. Das zweite Stapelgehäuseteil 12 weist die zweite Stapelgehäusewand bzw. Unterseitenwand 14 und die Stapelgehäusewand, insbesondere Umfangsseitenwand, 16 auf.

Des Weiteren weist das Stapelgehäuse 10 eine, insbesondere durch die Stapelgehäusewände 13, 14, 15, 16 definierte, gemeinsame Stapelgehäuseöffnung 10O auf. Die Pouchzellen 21' sind derart ausgebildet und in dem Stapel 20' innerhalb des Stapelgehäuses 10 angeordnet, dass die Zelltabs 22' auf der gemeinsamen Kontaktseite, insbesondere Vorderseite, 20V des Stapels 20' an der gemeinsamen Stapelgehäuseöffnung 10O angeordnet sind.

Insbesondere ist das Stapelgehäuse 10 innerhalb des Akkupackgehäuses 80 angeordnet, und insbesondere ein Innengehäuse bzw. nicht von außen zugänglich. Außerdem reicht die Vergussmasse 99, insbesondere eine Füllhöhe bzw. ein Gießspiegel der Vergussmasse 99, mindestens bis zu dem Stapelgehäuse 10 hin, insbesondere nach oben und/oder in der Verbindungsrichtung y, wie in Fig. 12 bis 15 und 17 gezeigt. Weiter ist das Stapelgehäuse 10 nicht gasdicht, insbesondere dass aus dem Stapelgehäuse 10 Gas entweichen kann. Zudem ist das Stapelgehäuse 10, insbesondere sind die Stapelgehäusewände 13, 14, 15, 16, 17, von den Pouchzellen 21' elektrisch isoliert.

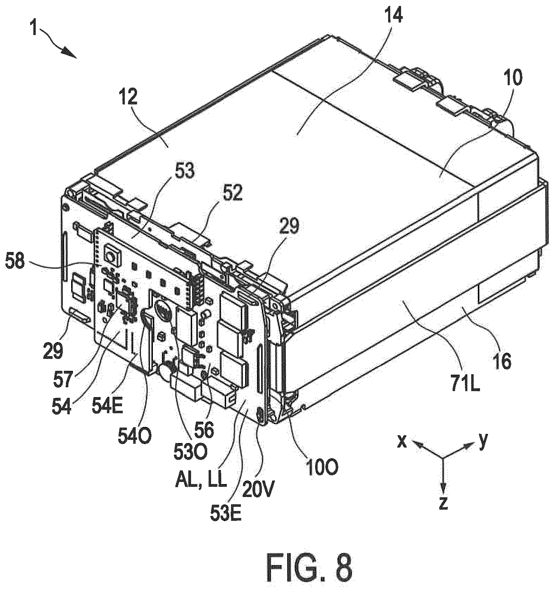

Des Weiteren weist im gezeigten Ausführungsbeispiel der Akkupack 1 mindestens einen elektrischen Leistungsverbinder 29 auf, im gezeigten Ausführungsbeispiel zwei Leistungsverbinder 29, wie in Fig. 8 gezeigt. Der elektrische Leistungsverbinder 29 ist mit einem der Zelltabs 22' durch eine stoffschlüssige Verbindung, insbesondere eine Schweißverbindung, insbesondere unmittelbar, elektrisch verbunden.

Insbesondere ist der mindestens eine elektrische Leistungsverbinder 29 spannungsführend, insbesondere weist eine spannungsführende Oberfläche auf. Außerdem ist der mindestens eine elektrische Leistungsverbinder 29 innerhalb des zweiten Akkupackgehäuseteils 82 angeordnet. Weiter ist der mindestens eine elektrische Leistungsverbinder 29 durch die Vergussmasse 99 eingeschlossen.

Zudem trägt die Leiterplatte 52 Messelektronik 55, wie in Fig. 7 gezeigt. Die Messelektronik 55 ist zur Messung von Eigenschaften, insbesondere Spannungen SP, der Akkumulatorzellen 22 ausgebildet.

Im gezeigten Ausführungsbeispiel ist die Leiterplatte 52, insbesondere die Messelektronik 55, mit mehreren der Zellkontakte 22, insbesondere Zelltabs 22', mittels elektrischer Zellverbinder 52eV elektrisch verbunden.

Insbesondere sind die elektrischen Zellverbinder 52eV spannungsführend, insbesondere weisen spannungsführende Oberflächen auf. Des Weiteren sind die elektrischen Zellverbinder 52eV innerhalb des zweiten Akkupackgehäuseteils 82 angeordnet. Außerdem sind die elektrischen Zellverbinder 52eV durch die Vergussmasse 99 eingeschlossen.

Zusätzlich trägt die, insbesondere weitere, Leiterplatte 53 Leistungselektronik 56, wie in Fig. 8 gezeigt. Die Leistungselektronik 56 ist zur Steuerung der Abgabe der elektrischen Antriebsleistung AL von dem Akkupack 1 und/oder einer Aufnahme von elektrischer Ladeleistung LL durch den Akkupack 1, insbesondere in Abhängigkeit von den gemessenen Eigenschaften, ausgebildet.

Im gezeigten Ausführungsbeispiel ist die weitere Leiterplatte 53 entfernter als die Leiterplatte 52 von dem Zellblock 20, insbesondere Stapel 20', angeordnet.

Weiter ist im gezeigten Ausführungsbeispiel die weitere Leiterplatte 53, insbesondere die Leistungselektronik 56, mit der Leiterplatte 52, insbesondere der Messelektronik 55, elektrisch verbunden.

Zudem ist im gezeigten Ausführungsbeispiel die weitere Leiterplatte 53, insbesondere die Leistungselektronik 56, mit dem mindestens einen elektrischen Leistungsverbinder 29 elektrisch verbunden.

Zusätzlich trägt die, insbesondere nochmals weitere, Leiterplatte 54 Benutzerschnittstellenelektronik 57 und Übertragungselektronik 58. Die Benutzerschnittstellenelektronik 57 ist zur Interaktion mit einem Benutzer ausgebildet. Die Übertragungselektronik 58 ist zur kabellosen Übertragung von mindestens einem Betriebsparameter und/oder Betriebszustand ausgebildet.

Im gezeigten Ausführungsbeispiel ist die nochmals weitere Leiterplatte 54 entfernter als die Leiterplatte 52, und insbesondere als die weitere Leiterplatte 53, von dem Zellblock 20, insbesondere Stapel 20', angeordnet, insbesondere an einem dem ersten Akkupackgehäuseteil 81 entfernten Ende 82V des zweiten Akkupackgehäuseteils 82, wie in Fig. 11 bis 15 gezeigt.

Des Weiteren ist im gezeigten Ausführungsbeispiel die Benutzerschnittstellenelektronik 57 zum Ausgeben, insbesondere Anzeigen, eines Ladezustands des Akkupacks 1 ausgebildet.

Außerdem ist im gezeigten Ausführungsbeispiel die nochmals weitere Leiterplatte 54, insbesondere sind die Benutzerschnittstellenelektronik 57 und die Übertragungselektronik 58, mit der Leiterplatte 52, insbesondere der Messelektronik 55, und/oder der weiteren Leiterplatte 53, insbesondere der Leistungselektronik 56, elektrisch verbunden.

Weiter weist im gezeigten Ausführungsbeispiel die mindestens Leiterplatte 52, 53, 54 eine Aussparung 52O, 53O, 54O, insbesondere ein Durchgangsloch, auf. Die Aussparung 52O, 53O, 54O ist zur Durchführung einer Sensorleitung 30L, für einen Fluss von der Vergussmasse 99 und/oder zur Positionierung der mindestens einen Leiterplatte 52, 53, 54, insbesondere der Leiterplatten 52, 53, 54 zueinander, ausgebildet.

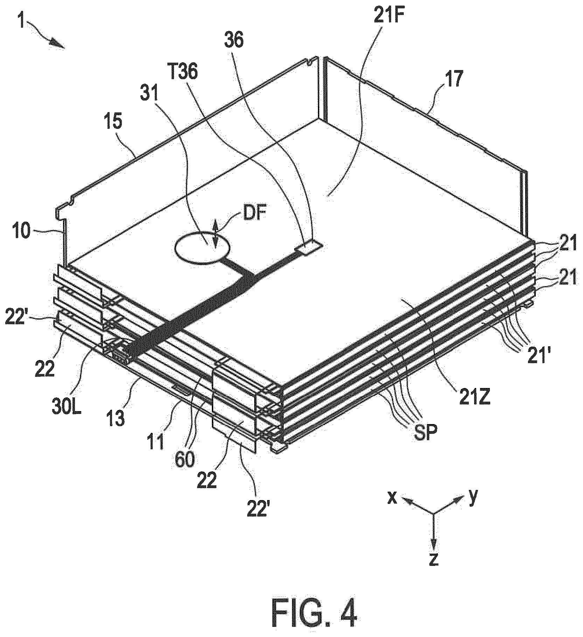

Zudem weist im gezeigten Ausführungsbeispiel der Akkupack 1 einen Drucksensor 31 auf, wie in Fig. 4 gezeigt. Der Drucksensor 31 ist zur Erfassung, insbesondere Messung, einer Druckkraft DF, insbesondere in der Stapelrichtung z, wirkend auf die Pouchzellen 21' ausgebildet. Des Weiteren weist der Akkupack 1 einen inneren Temperatursensor 36 auf. Der innere Temperatursensor 36 ist zur Messung einer inneren Temperatur T36 des Stapels 20' ausgebildet. Die Sensorleitung 30L ist von dem Drucksensor 31 und dem inneren Temperatursensor 36. Die Leiterplatte 52, insbesondere die Messelektronik 55, ist mit dem Drucksensor 31 und dem inneren Temperatursensor 36 mittels der Sensorleitung 30L elektrisch verbunden.

Insbesondere ist die Sensorleitung 30L elektrisch isoliert mit Ausnahme eines Endes an der Leiterplatte 52. Das leiterplattenseitige Ende der Sensorleitung 30L ist innerhalb des zweiten Akkupackgehäuseteils 82 angeordnet. Außerdem ist das leiterplattenseitige Ende der Sensorleitung 30L durch die Vergussmasse 99 eingeschlossen.

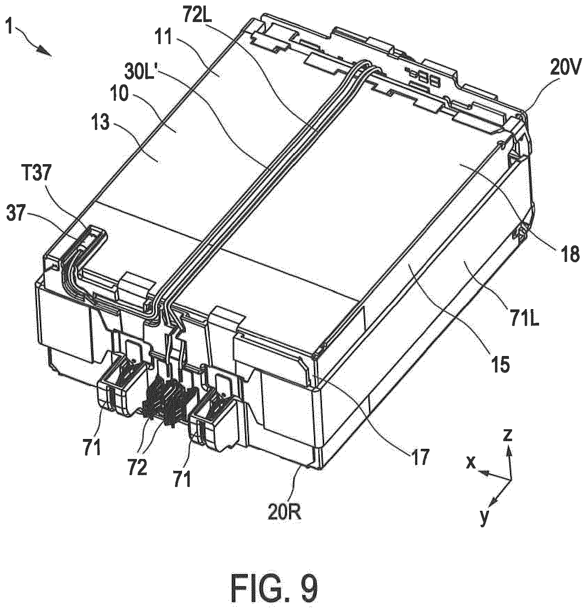

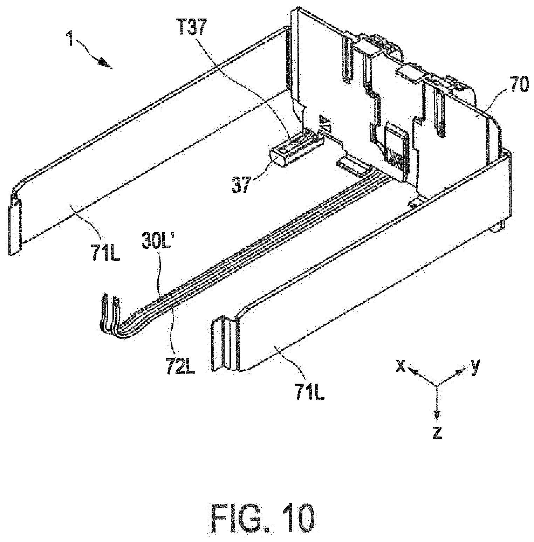

Weiter weist im gezeigten Ausführungsbeispiel der Akkupack 1 einen äußeren Temperatursensor 37 auf, wie in Fig. 9 und 10 gezeigt. Der äußere Temperatursensor 37 ist zur Messung einer äußeren Temperatur T37 des Stapels 20' ausgebildet. Die Leiterplatte 52, insbesondere die Messelektronik 55, ist mit dem Temperatursensor 37 mittels einer weiteren Sensorleitung 30L' elektrisch verbunden.

Insbesondere ist die weitere Sensorleitung 30L' elektrisch isoliert mit Ausnahme eines Endes an der Leiterplatte 52. Das leiterplattenseitige Ende der weiteren Sensorleitung 30L' ist innerhalb des zweiten Akkupackgehäuseteils 82 angeordnet. Zudem ist das leiterplattenseitige Ende der weiteren Sensorleitung 30L' durch die Vergussmasse 99 eingeschlossen.

Des Weiteren ist im gezeigten Ausführungsbeispiel die Leistungselektronik 56 zur Steuerung der Abgabe der Antriebsleistung AL von dem Akkupack 1 und/oder der Aufnahme von der Ladeleistung LL durch den Akkupack 1 in Abhängigkeit von der erfassten, insbesondere gemessenen, Druckkraft DF, der gemessenen inneren Temperatur T36 und der gemessenen äußeren Temperatur T37 ausgebildet.

Außerdem weist der Akkupack 1 mehrere Akkupackkontakte 71 auf, wie in Fig. 9 gezeigt. Die Akkupackkontakte 71 sind zur elektrischen Verbindung des Akkupacks 1 und des Bearbeitungsgeräts 101 miteinander zur Versorgung des Bearbeitungsgeräts 101 mit der elektrischen Antriebsleistung AL von dem Akkupack 1 ausgebildet. Weiter sind die Akkupackkontakte 71 an einem dem zweiten Akkupackgehäuseteil 82 entfernten Ende 81R des ersten Akkupackgehäuseteils 81 angeordnet.

Im gezeigten Ausführungsbeispiel sind die Akkupackkontakte 71 auf einer der Kontaktseite, insbesondere Vorderseite, 20V des Zellblocks 20 gegenüberliegenden Rückseite 20R des Zellblocks 20 angeordnet, insbesondere an dem Stapelgehäuse 10, insbesondere an der Stapelgehäusewand bzw. Rückseitenwand 17.

Zudem ist im gezeigten Ausführungsbeispiel die weitere Leiterplatte 53, insbesondere die Leistungselektronik 56, mit den Akkupackkontakten 71 mittels Leistungsleitungen 71L elektrisch verbunden.

Insbesondere sind die Leistungsleitungen 71L Leistungsschienen, insbesondere metallische Stanzbiegeelemente, die zur elektrischen Isolation, insbesondere jeweils, mit einem Schrumpfschlauch überzogen sind. In anderen Worten: die Leistungsleitungen 71L sind elektrisch isoliert mit Ausnahme eines, insbesondere jeweiligen, Endes an der weiteren Leiterplatte 53 und an den Akkupackkontakten 71. Das leiterplattenseitige Ende der Leistungsleitung 71L ist innerhalb des zweiten Akkupackgehäuseteils 82 angeordnet. Des Weiteren ist das leiterplattenseitige Ende der Leistungsleitung 71L durch die Vergussmasse 99 eingeschlossen.

Außerdem weist der Akkupack 1 mehrere Datenkontakte 72 auf, wie in Fig. 9 gezeigt. Die Datenkontakte 72 sind an dem entfernten Ende 81R des ersten Akkupackgehäuseteils 81 angeordnet.

Im gezeigten Ausführungsbeispiel sind die Datenkontakte 72 auf der Rückseite 20R des Zellblocks 20 angeordnet, insbesondere an dem Stapelgehäuse 10, insbesondere an der Stapelgehäusewand bzw. Rückseitenwand 17.

Weiter ist im gezeigten Ausführungsbeispiel die Leiterplatte 52, insbesondere die Messelektronik 55, mit den Datenkontakten 72 mittels einer Datenleitung 72L elektrisch verbunden.

Insbesondere ist die Datenleitung 72L elektrisch isoliert mit Ausnahme eines, insbesondere jeweiligen, Endes an der Leiterplatte 52 und an den Datenkontakten 72. Das leiterplattenseitige Ende der Datenleitung 72L ist innerhalb des zweiten Akkupackgehäuseteils 82 angeordnet.

Zudem ist das leiterplattenseitige Ende der Datenleitung 72L durch die Vergussmasse 99 eingeschlossen.

Somit sind alle spannungsführende Bauteile, insbesondere spannungsführende Oberflächen, innerhalb des zweiten Akkupackgehäuseteils 82 bzw. nicht an dem entfernten Ende 81R des ersten Akkupackgehäuseteils 81 durch die Vergussmasse 99 eingeschlossen.

Des Weiteren weist das andere Akkupackgehäuseteil 81, im gezeigten Ausführungsbeispiel das erste Akkupackgehäuseteil 81, mindestens eine Nut 89, insbesondere zur Führung des Akkupacks 1 bei mechanischer Verbindung mit dem Bearbeitungsgerät 101, auf, wie in Fig. 13 bis 16 gezeigt. Die Nut 89 verläuft an der Kopfanlagefläche 86 in Verlängerung des Gewindes 85, insbesondere in der Verbindungsrichtung y.

Im gezeigten Ausführungsbeispiel weist das andere Akkupackgehäuseteil 81 vier Nuten 89 auf. In alternativen Ausführungsbeispielen kann das andere Akkupackgehäuseteil nur, eine, insbesondere einzige, zwei, drei oder mindestens fünf Nuten aufweisen. Zusätzlich oder alternativ kann in alternativen Ausführungsbeispielen das zweite Akkupackgehäuseteil die mindestens eine Nut aufweisen.

Außerdem weist das erste Akkupackgehäuseteil 81 eine Anzahl von Luftöffnungen 91, insbesondere eine Anzahl von Lufteinlassöffnungen, auf, wie in Fig. 13 bis 16 gezeigt. Die Anzahl von Luftöffnungen 91 ist an dem benachbarten Ende 81V des ersten Akkupackgehäuseteils 81, insbesondere zwischen zwei Nuten 89, angeordnet.

Im gezeigten Ausführungsbeispiel weist der Akkupack 1, insbesondere das erste Akkupackgehäuseteil 81, mindestens einen Luftkühlkreislauf 90 aufweisend die Anzahl von Lufteinlassöffnungen 91 und eine Anzahl von Luftauslassöffnungen 92 in dem Akkupackgehäuse 80, insbesondere dem ersten Akkupackgehäuseteil 81, für eine Kühlluftströmung LS von der Anzahl von Lufteinlassöffnungen 91 an den Akkumulatorzellen 21, insbesondere dem Stapelgehäuse 10, vorbei zu der Anzahl von Luftauslassöffnungen 92 zur Kühlung der Akkumulatorzellen 21 auf.

Insbesondere ist die Anzahl von Luftauslassöffnungen 92 an dem entfernten Ende 81R des ersten Akkupackgehäuseteils 81 angeordnet.

Weiter ist der äußere Temperatursensor 37 in dem Luftkühlkreislauf 90 zwischen der Anzahl von Lufteinlassöffnungen 91 und der Anzahl von Luftauslassöffnungen 92, insbesondere der Anzahl von Lufteinlassöffnungen 91 und/oder der Anzahl von Luftauslassöffnungen 92 zugewandt, angeordnet.

Zudem weist im gezeigten Ausführungsbeispiel das Stapelgehäuse 10 eine thermische Verbindung mit den Akkumulatorzellen 21, insbesondere den Pouchzellen 21', auf und ist thermisch leitfähig. Dies ermöglicht eine Wärmeableitung von den Akkumulatorzellen 21 über das Stapelgehäuse 10 und/oder die Vergussmasse 90 nach außen, insbesondere nach unten und/oder entgegen der Verbindungsrichtung y.

Insbesondere berührt das Stapelgehäuse 10, insbesondere berühren die Stapelgehäusewände 13, 14, 15, 16, 17, die Pouchzellen 21' und zwischen den Pouchzellen 21' und den Stapelgehäusewänden 15, 16, 17 ist Wärmeleitpaste.

Des Weiteren weist im gezeigten Ausführungsbeispiel der Akkupack 1 mindestens eine thermische Isolierung 60, insbesondere ein Schaumstoff, auf, wie in Fig. 4 bis 6 gezeigt. Die mindestens eine thermische Isolierung 60 ist jeweils zwischen zwei der Pouchzellen 21' angeordnet und erstreckt sich über einen Großteil der Fläche 21F der Pouchzellen 21.

Zusätzlich ist im gezeigten Ausführungsbeispiel die mindestens eine thermische Isolierung 60 ein Pufferelement. Das mindestens eine Pufferelement 60 ist dazu ausgebildet, über eine Pufferdicke 60D des mindestens einen Pufferelements 60 ein Aufblähen, soweit vorhanden, der Pouchzellen 21', insbesondere in der Stapelrichtung z, zu puffern.

Im gezeigten Ausführungsbeispiel weist der Akkupack 1 fünf thermische Isolierungen 60 auf. In alternativen Ausführungsbeispielen kann der Akkupack nur eine einzige thermische Isolierung aufweisen.

Außerdem weist im gezeigten Ausführungsbeispiel der Akkupack 1 eine maximale elektrische Antriebsleistung MAL von 3 kW auf. In alternativen Ausführungsbeispielen kann der Akkupack eine maximale elektrische Antriebsleistung von minimal 1 kW und/oder von maximal 10 kW aufweisen.

Zusätzlich weist im gezeigten Ausführungsbeispiel der Akkupack 1 eine Nennspannung NSP von 36 V auf. In alternativen Ausführungsbeispielen kann der Akkupack eine Nennspannung von minimal 10 V und/oder von maximal 100 V aufweisen.

Zusätzlich weist im gezeigten Ausführungsbeispiel der Akkupack 1 einen maximalen Energieinhalt MEI von 337 Wh auf. In alternativen Ausführungsbeispielen kann der Akkupack einen maximalen Energieinhalt von minimal 100 Wh und/oder von maximal 1000 Wh aufweisen.

Zusätzlich weist im gezeigten Ausführungsbeispiel der Akkupack 1 eine Masse m1 von 2 kg auf. In alternativen Ausführungsbeispielen kann der Akkupack eine Masse von minimal 0,5 kg und/oder von maximal 10 kg aufweisen.

Zusätzlich weist im gezeigten Ausführungsbeispiel der Akkupack 1 eine Höhe 1H, insbesondere in der Stapelrichtung z, von 5 cm, eine Breite 1B, insbesondere in einer zu der Stapelrichtung z und/oder der Verbindungsrichtung y orthogonalen Richtung x, von 10 cm, und eine Tiefe 1T, insbesondere in der Verbindungsrichtung y, von 15 cm auf. In alternativen Ausführungsbeispielen kann der Akkupack eine Höhe von minimal 2,5 cm und/oder von maximal 10 cm, und/oder eine Breite von minimal 5 cm und/oder von maximal 20 cm, und/oder eine Tiefe von minimal 7,5 cm und/oder von maximal 30 cm aufweisen.

Fig. 1 zeigt ein erfindungsgemäßes Bearbeitungssystem 100. Das Bearbeitungssystem 100 weist den Akkupack 1 und ein elektrisch angetriebenes Bearbeitungsgerät 101 auf. Der Akkupack 1 und das Bearbeitungsgerät 101 sind zur elektrischen Verbindung miteinander zur Versorgung des Bearbeitungsgeräts 101 mit elektrischer Antriebsleistung AL von dem Akkupack 1 ausgebildet, insbesondere elektrisch verbunden.

Im Detail weist das Bearbeitungsgerät 101 eine Akkuaufnahme 102 auf. Die Akkuaufnahme 102 ist zum Aufnehmen des Akkupacks 1 ausgebildet. Insbesondere ist der Akkupack 1 aufgenommen.

In Fig. 1 ist das elektrisch angetriebene Bearbeitungsgerät 101 eine Säge101', ein Trennschleifer 101" oder ein Blasgerät 101‴. In alternativen Ausführungsbeispielen kann das Bearbeitungsgerät ein Hoch-Entaster, ein Freischneider, eine Heckenschere, ein Heckenschneider, ein Laubbläser, eine Astschere, ein Kehrgerät, eine Kehrwalze, eine Kehrbürste, ein Rasenmäher, ein Vertikutierer oder eine Grasschere sein.

Wie die gezeigten und oben erläuterten Ausführungsbeispiele deutlich machen, stellt die Erfindung einen Akkupack zur Versorgung eines elektrisch angetriebenen Bearbeitungsgeräts mit elektrischer Antriebsleistung, ein Bearbeitungssystem aufweisend einen solchen Akkupack und ein elektrisch angetriebenes Bearbeitungsgerät und ein Verfahren zur Herstellung eines Akkupacks zur Versorgung eines elektrisch angetriebenen Bearbeitungsgeräts mit elektrischer Antriebsleistung, wobei der Akkupack und das Verfahren jeweils verbesserte Eigenschaften aufweisen, bereit.

## Patentansprüche

1. Akkupack (1) zur Versorgung eines elektrisch angetriebenen Bearbeitungsgeräts (101) mit elektrischer Antriebsleistung (AL), wobei der Akkupack (1) aufweist:
- mehrere Akkumulatorzellen (21), wobei die Akkumulatorzellen (21) Zellkontakte (22) aufweisen,
- mindestens eine Leiterplatte (52, 53, 54), wobei die mindestens eine Leiterplatte (52, 53, 54) mit den Zellkontakten (22) elektrisch verbunden ist, und
- ein Akkupackgehäuse (80), wobei das Akkupackgehäuse (80) ein erstes Akkupackgehäuseteil (81) und ein zweites Akkupackgehäuseteil (82) aufweist, wobei das erste Akkupackgehäuseteil (81) und das zweite Akkupackgehäuseteil (82) durcheinander verschlossen sind,
- wobei die Akkumulatorzellen (21) innerhalb des Akkupackgehäuses (80) angeordnet sind,
**dadurch gekennzeichnet,**
- **dass** die Zellkontakte (22) und die mindestens eine Leiterplatte (52, 53, 54) innerhalb des zweiten Akkupackgehäuseteils (82) angeordnet sind, wobei das zweite Akkupackgehäuseteil (82) als Gießform für eine Vergussmasse (99) ausgebildet ist, und wobei die Zellkontakte (22) und die mindestens eine Leiterplatte (52, 53, 54) durch die Vergussmasse (99) eingeschlossen sind, und/oder
- **dass** die mindestens eine Leiterplatte (52, 53, 54) innerhalb des Akkupackgehäuses (80) angeordnet ist, wobei das eine Akkupackgehäuseteil (82) mindestens ein Gewinde (85) aufweist, wobei das andere Akkupackgehäuseteil (81) mindestens eine Kopfanlagefläche (86) aufweist, wobei die Kopfanlagefläche (86) an einem dem einen Akkupackgehäuseteil (82) benachbarten Ende (81V) des anderen Akkupackgehäuseteils (81) angeordnet ist, wobei der Akkupack (1) mindestens eine Schraube (87) aufweist, wobei die Schraube (87) zur mechanischen Verbindung des einen Akkupackgehäuseteils (82) und des anderen Akkupackgehäuseteils (81) miteinander in das Gewinde (85) eingeschraubt ist und mit einem Schraubenkopf (88) an der Kopfanlagefläche (86) anliegt.

2. Akkupack (1) nach Anspruch 1,
- wobei das erste Akkupackgehäuseteil (81) ein Gehäusebehälter (81') ist und wobei das zweite Akkupackgehäuseteil (82) ein Gehäusedeckel (82') ist.

3. Akkupack (1) nach einem der vorhergehenden Ansprüche,
- wobei die Akkumulatorzellen (21) Zellhüllen (21Z) aufweisen, wobei die Vergussmasse (99) mindestens bis zu den Zellhüllen (21Z) hinreicht, und/oder
- wobei die Vergussmasse (99) bis zu einem dem ersten Akkupackgehäuseteil (81) benachbarten Ende (82R) des zweiten Akkupackgehäuseteils (82) hinreicht, und/oder
- wobei die Vergussmasse (99) mindestens bis zu einem dem zweiten Akkupackgehäuseteil (82) benachbarten Ende (81V) des ersten Akkupackgehäuseteils (81) hinreicht.

4. Akkupack (1) nach einem der vorhergehenden Ansprüche,
- wobei die Zellkontakte (22) und die mindestens eine Leiterplatte (52, 53, 54) durch die Vergussmasse (99) in einem gemeinsamen Vergussblock (98) eingeschlossen sind.

5. Akkupack (1) nach einem der vorhergehenden Ansprüche,
- wobei die Akkumulatorzellen (21) derart ausgebildet und in einem Zellblock (20) angeordnet sind, dass die Zellkontakte (22) auf einer gemeinsamen Kontaktseite (20V) des Zellblocks (20) angeordnet sind.

6. Akkupack (1) nach Anspruch 5,
- wobei die mindestens eine Leiterplatte (52, 53, 54) auf der Kontaktseite (20V) angeordnet ist.

7. Akkupack (1) nach einem der vorhergehenden Ansprüche,
- wobei die Akkumulatorzellen (21) Pouchzellen (21') sind und wobei die Zellkontakte (22) Zelltabs (22') sind.

8. Akkupack (1) nach einem der vorhergehenden Ansprüche,
- wobei die mindestens eine Leiterplatte (52) Messelektronik (55) trägt, wobei die Messelektronik (55) zur Messung von Eigenschaften (SP, T36, T37, DF) der Akkumulatorzellen (22) ausgebildet ist.

9. Akkupack (1) nach einem der vorhergehenden Ansprüche, wobei der Akkupack (1) aufweist:
- mehrere Akkupackkontakte (71), wobei die Akkupackkontakte (71) zur elektrischen Verbindung des Akkupacks (1) und des Bearbeitungsgeräts (101) miteinander zur Versorgung des Bearbeitungsgeräts (101) mit der elektrischen Antriebsleistung (AL) von dem Akkupack (1) ausgebildet und an einem dem zweiten Akkupackgehäuseteil (82) entfernten Ende (81R) des ersten Akkupackgehäuseteils (81) angeordnet sind.

10. Akkupack (1) nach einem der vorhergehenden Ansprüche,
- wobei die mindestens eine Leiterplatte (52, 53, 54) innerhalb des Akkupackgehäuses (80) angeordnet ist, wobei das eine Akkupackgehäuseteil (82) das mindestens eine Gewinde (85) aufweist, wobei das andere Akkupackgehäuseteil (81) die mindestens eine Kopfanlagefläche (86) aufweist, wobei die Kopfanlagefläche (86) an dem dem einen Akkupackgehäuseteil (82) benachbarten Ende (81V) des anderen Akkupackgehäuseteils (81) angeordnet ist, wobei der Akkupack (1) die mindestens eine Schraube (87) aufweist, wobei die Schraube (87) zur mechanischen Verbindung des einen Akkupackgehäuseteils (82) und des anderen Akkupackgehäuseteils (81) miteinander in das Gewinde (85) eingeschraubt ist und mit dem Schraubenkopf (88) an der Kopfanlagefläche (86) anliegt, und
- wobei das andere Akkupackgehäuseteil (81) mindestens eine Nut (89) aufweist, wobei die Nut (89) an der Kopfanlagefläche (86) in Verlängerung des Gewindes (85) verläuft.

11. Akkupack (1) nach einem der vorhergehenden Ansprüche,
- wobei das erste Akkupackgehäuseteil (81) eine Anzahl von Luftöffnungen (91) aufweist, wobei die Anzahl von Luftöffnungen (91) an einem dem zweiten Akkupackgehäuseteil (82) benachbarten Ende (81V) des ersten Akkupackgehäuseteils (81) angeordnet sind.

12. Akkupack (1) nach einem der vorhergehenden Ansprüche,
- wobei der Akkupack (1) eine maximale elektrische Antriebsleistung (MAL) von minimal 1 kW, insbesondere von minimal 2 kW, und/oder von maximal 10 kW, insbesondere von maximal 5 kW, aufweist.

13. Bearbeitungssystem (100), wobei das Bearbeitungssystem (100) aufweist:
- einen Akkupack (1) nach einem der vorhergehenden Ansprüche, und
- ein elektrisch angetriebenes Bearbeitungsgerät (101),
- wobei der Akkupack (1) und das Bearbeitungsgerät (101) zur elektrischen Verbindung miteinander zur Versorgung des Bearbeitungsgeräts (101) mit elektrischer Antriebsleistung (AL) von dem Akkupack (1) ausgebildet sind.

14. Verfahren zur Herstellung eines Akkupacks (1), insbesondere nach einem der Ansprüche 1 bis 12, zur Versorgung eines elektrisch angetriebenen Bearbeitungsgeräts (101) mit elektrischer Antriebsleistung (AL), wobei das Verfahren die Schritte aufweist:
a) Anordnen von Zellkontakten (22) mehrerer Akkumulatorzellen (21) und mindestens einer Leiterplatte (52, 53, 54), wobei die mindestens eine Leiterplatte (52, 53, 54) mit den Zellkontakten (22) elektrisch verbunden ist, innerhalb eines zweiten Akkupackgehäuseteils (82) eines Akkupackgehäuses (80), wobei das zweite Akkupackgehäuseteil (82) als Gießform für eine Vergussmasse (99) ausgebildet ist,
b) Einschließen der Zellkontakte (22) und der mindestens einen Leiterplatte (52, 53, 54) durch die Vergussmasse (99), und
c) Anordnen der Akkumulatorzellen (21) innerhalb des Akkupackgehäuses (80) und Verschließen des zweiten Akkupackgehäuseteils (82) und eines ersten Akkupackgehäuseteils (81) des Akkupackgehäuses (80) durcheinander.

15. Verfahren nach Anspruch 14,
- wobei der Schritt c) aufweist: Anordnen und Verschließen während die Vergussmasse (99) in einem flüssigen Zustand ist, und
- wobei das Verfahren den Schritt aufweist: d) Härten der Vergussmasse (99) in einen festen Zustand.

## Claims

1. Battery pack (1) for supplying an electrically driven treatment apparatus (101) with an electric driving power (AL), the battery pack (1) comprising:
- a plurality of accumulator cells (21), wherein the accumulator cells (21) have cell contacts (22),
- at least one circuit board (52, 53, 54), wherein the at least one circuit board (52, 53, 54) is electrically connected to the cell contacts (22), and
- a battery pack housing (80), wherein the battery pack housing (80) has a first battery pack housing part (81) and a second battery pack housing part (82), wherein the first battery pack housing part (81) and the second battery pack housing part (82) are closed by each other,
- wherein the accumulator cells (21) are disposed within the battery pack housing (80),
**characterized**
- **in that** the cell contacts (22) and the at least one circuit board (52, 53, 54) are disposed within the second battery pack housing part (82), wherein the second battery pack housing part (82) is configured as a mold for a casting compound (99), and wherein the cell contacts (22) and the at least one circuit board (52, 53, 54) are enclosed by the casting compound (99), and/or
- **in that** the at least one circuit board (52, 53, 54) is disposed within the battery pack housing (80), wherein the one battery pack housing part (82) has at least one thread (85), wherein the other battery pack housing part (81) has at least one head abutment surface (86), wherein the head abutment surface (86) is disposed on an end (81V) adjacent to the one battery pack housing part (82) of the other battery pack housing part (81), wherein the battery pack (1) has at least one screw (87), wherein the screw (87) is screwed into the thread (85) for mechanical connection of the one battery pack housing part (82) and the other battery pack housing part (81) to each other, and a screw head (88) bears on the head abutment surface (86).

2. Battery pack (1) according to claim 1,
- wherein the first battery pack housing part (81) is a housing container (81') and wherein the second battery pack housing part (82) is a housing cover (82').

3. Battery pack (1) according to any of the preceding claims,
- wherein the accumulator cells (21) have cell shells (21Z), wherein the casting compound (99) reaches at least up to the cell shells (21Z), and/or
- wherein the casting compound (99) reaches up to an end (82R) adjacent to the first battery pack housing part (81) of the second battery pack housing part (82), and/or
- wherein the casting compound (99) reaches at least up to an end (81V) adjacent to the second battery pack housing part (82) of the first battery pack housing part (81).

4. Battery pack (1) according to any of the preceding claims,
- wherein the cell contacts (22) and the at least one circuit board (52, 53, 54) are enclosed by the casting compound (99) in a common casting block (98).

5. Battery pack (1) according to any of the preceding claims,
- wherein the accumulator cells (21) are configured and disposed in a cell block (20) such that the cell contacts (22) are disposed on a common contact side (20V) of the cell block (20).

6. Battery pack (1) according to claim 5,
- wherein the at least one circuit board (52, 53, 54) is disposed on the contact side (20V).

7. Battery pack (1) according to any of the preceding claims,
- wherein the accumulator cells (21) are pouch cells (21') and wherein the cell contacts (22) are cell tabs (22').

8. Battery pack (1) according to any of the preceding claims,
- wherein the at least one circuit board (52) holds measurement electronics (55), wherein the measurement electronics (55) are configured for measuring properties (SP, T36, T37, DF) of the accumulator cells (21).

9. Battery pack (1) according to any of the preceding claims, the battery pack (1) comprising:
- a plurality of battery pack contacts (71), wherein the battery pack contacts (71) are configured for electrical connection of the battery pack (1) and the treatment apparatus (101) together for supplying the treatment apparatus (101) with the electric driving power (AL) from the battery pack (1) and disposed on an end (81R) remote from the second battery pack housing part (82) of the first battery pack housing part (81).

10. Battery pack (1) according to any of the preceding claims,
- wherein the at least one circuit board (52, 53, 54) is disposed within the battery pack housing (80), wherein the one battery pack housing part (82) has the at least one thread (85), wherein the other battery pack housing part (81) has the at least one head abutment surface (86), wherein the head abutment surface (86) is disposed on the end (81V) adjacent to the one battery pack housing part (82) of the other battery pack housing part (81), wherein the battery pack (1) has the at least one screw (87), wherein the screw (87) is screwed into the thread (85) for mechanical connection of the one battery pack housing part (82) and the other battery pack housing part (81) to each other, and the screw head (88) bears on the head abutment surface (86), and
- wherein the other battery pack housing part (81) has at least one groove (89), wherein the groove (89) extends on the head abutment surface (86) in prolongation of the thread (85).

11. Battery pack (1) according to any of the preceding claims,
- wherein the first battery pack housing part (81) has a number of air openings (91), wherein the number of air openings (91) are disposed on an end (81V) adjacent to the second battery pack housing part (82) of the first battery pack housing part (81).

12. Battery pack (1) according to any of the preceding claims,
- wherein the battery pack (1) has a maximum electric driving power (MAL) of a minimum of 1 kW, in particular a minimum of 2 kW, and/or of a maximum of 10 kW, in particular a maximum of 5 kW.

13. Treatment system (100), the treatment system (100) comprising:
- a battery pack (1) according to any of the preceding claims, and
- an electrically driven treatment apparatus (101),
- wherein the battery pack (1) and the treatment apparatus (101) are configured for electrical connection with each other for supplying the treatment apparatus (101) with electric driving power (AL) from the battery pack (1).

14. Method for the production of a battery pack (1), in particular according to any of claims 1 to 12, for supplying an electrically driven treatment apparatus (101) with electric driving power (AL), the method comprising the steps:
a) disposing cell contacts (22) of a plurality of accumulator cells (21) and at least one circuit board (52, 53, 54), wherein the at least one circuit board (52, 53, 54) is electrically connected to the cell contacts (22), within a second battery pack housing part (82) of a battery pack housing (80), wherein the second battery pack housing part (82) is configured as a mold for a casting compound (99),
b) enclosing the cell contacts (22) and the at least one circuit board (52, 53, 54) by the casting compound (99), and
c) disposing the accumulator cells (21) within the battery pack housing (80) and closing the second battery pack housing part (82) and a first battery pack housing part (81) of the battery pack housing (80) by each other.

15. Method according to claim 14,
- wherein the step c) comprises: disposing and closing while the casting compound (99) is in a liquid state, and
- wherein the method comprises the step: d) hardening the casting compound (99) in a solid state.

## Revendications

1. Bloc d'accumulateurs (1) pour l'alimentation d'un appareil d'usinage (101) entraîné électriquement avec une puissance d'entraînement électrique (AL), le bloc d'accumulateurs (1) possédant :
- plusieurs cellules d'accumulateur (21), les cellules d'accumulateur (21) possédant des contacts de cellule (22),
- au moins une carte de circuit imprimé (52, 53, 54), ladite au moins une carte de circuit imprimé (52, 53, 54) étant connectée électriquement aux contacts de cellule (22), et
- un boîtier de bloc d'accumulateurs (80), le boîtier de bloc d'accumulateurs (80) comportant une première partie de boîtier de bloc d'accumulateurs (81) et une seconde partie de boîtier de bloc d'accumulateurs (82), la première partie de boîtier de bloc d'accumulateurs (81) et la seconde partie de boîtier de bloc d'accumulateurs (82) étant fermées l'une par l'autre,
- les cellules d'accumulateur (21) étant disposées à l'intérieur du boîtier de bloc d'accumulateurs (80), **caractérisé**
- **en ce que** les contacts de cellule (22) et ladite au moins une carte de circuit imprimé (52, 53, 54) sont disposés à l'intérieur de la seconde partie de boîtier de bloc d'accumulateurs (82), la seconde partie de boîtier de bloc d'accumulateurs (82) étant configurée sous forme de moule de coulée pour une masse de scellement (99), et les contacts de cellule (22) et ladite au moins une carte de circuit imprimé (52, 53, 54) étant encapsulés par la masse de scellement (99), et/ou
- **en ce que** ladite au moins une carte de circuit imprimé (52, 53, 54) est disposée à l'intérieur du boîtier de bloc d'accumulateurs (80), ladite partie de boîtier de bloc d'accumulateurs (82) possédant au moins un filetage (85), l'autre partie de boîtier de bloc d'accumulateurs (81) possédant au moins une surface d'appui de tête (86), la surface d'appui de tête (86) étant disposée à une extrémité (81V) de l'autre partie de boîtier de bloc d'accumulateurs (81) adjacente à la première partie de boîtier de bloc d'accumulateurs (82), le bloc d'accumulateurs (1) possédant au moins une vis (87), la vis (87) étant vissée dans le filetage (85) pour relier mécaniquement l'une à l'autre ladite partie de boîtier de bloc d'accumulateurs (82) et l'autre partie de boîtier de bloc d'accumulateurs (81) et reposant par une tête de vis (88) sur la surface d'appui de tête (86).

2. Bloc d'accumulateurs (1) selon la revendication 1,
- la première partie de boîtier de bloc d'accumulateurs (81) étant un réceptacle de boîtier (81') et la seconde partie de boîtier de bloc d'accumulateurs (82) étant un capot de boîtier (82').

3. Bloc d'accumulateurs (1) selon l'une des revendications précédentes,
- les cellules d'accumulateur (21) possédant des enveloppes de cellule (21Z), la masse de scellement (99) s'étendant au moins jusqu'aux enveloppes de cellule (21Z), et/ou
- la masse de scellement (99) s'étendant jusqu'à une extrémité (82R) du second bloc d'accumulateurs (82) adjacente à la première partie de boîtier d'accumulateurs (81), et/ou
- la masse de scellement (99) s'étendant au moins jusqu'à une extrémité (81V) de la première partie de boîtier de bloc d'accumulateurs (81) adjacente à la seconde partie de boîtier de bloc d'accumulateurs (82).

4. Bloc d'accumulateurs (1) selon l'une des revendications précédentes,
- les contacts de cellule (22) et ladite au moins une carte de circuit imprimé (52, 53, 54) étant encapsulés par la masse de scellement (99) dans un bloc de scellement commun (98).

5. Bloc d'accumulateurs (1) selon l'une des revendications précédentes,
- les cellules d'accumulateur (21) étant configurées et disposées dans un bloc de cellules (20) de telle sorte que les contacts de cellule (22) soient disposés sur un côté de contact commun (20V) du bloc de cellules (20).

6. Bloc d'accumulateurs (1) selon la revendication 5,
- ladite au moins une carte de circuit imprimé (52, 53, 54) étant disposée sur le côté de contact (20V).

7. Bloc d'accumulateurs (1) selon l'une des revendications précédentes,
- les cellules d'accumulateur (21) étant des cellules de poche (21') et les contacts de cellule (22) étant des languettes de cellule (22').

8. Bloc d'accumulateurs (1) selon l'une des revendications précédentes,
- ladite au moins une carte de circuit imprimé (52) portant une électronique de mesure (55), ladite électronique de mesure (55) étant configurée pour mesurer des caractéristiques (SP, T36, T37, DF) des cellules d'accumulateur (22).

9. Bloc d'accumulateurs (1) selon l'une des revendications précédentes, le bloc d'accumulateurs (1) possédant :
- plusieurs contacts de bloc d'accumulateurs (71), les contacts de bloc d'accumulateurs (71) étant configurés pour connecter électriquement l'un à l'autre le bloc d'accumulateurs (1) et l'appareil d'usinage (101) afin d'alimenter l'appareil d'usinage (101) en puissance d'entraînement électrique (AL) à partir du bloc d'accumulateurs (1) et étant disposés à une extrémité (81R) de la première partie de boîtier de bloc d'accumulateurs (81) éloignée de la seconde partie de boîtier de bloc d'accumulateurs (82).

10. Bloc d'accumulateurs (1) selon l'une des revendications précédentes,
- ladite au moins une carte de circuit imprimé (52, 53, 54) étant disposée à l'intérieur du boîtier de bloc d'accumulateurs (80), ladite partie de boîtier de bloc d'accumulateurs (82) possédant ledit au moins un filetage (85), l'autre partie de boîtier de bloc d'accumulateurs (81) possédant ladite au moins une surface d'appui de tête (86), la surface d'appui de tête (86) étant disposée à l'extrémité (81V) de l'autre partie de boîtier de bloc d'accumulateurs (81) adjacente à la première partie de boîtier de bloc d'accumulateurs (82), le bloc d'accumulateurs (1) possédant ladite au moins une vis (87), la vis (87) étant vissée dans le filetage (85) pour relier mécaniquement l'une à l'autre ladite partie de boîtier de bloc d'accumulateurs (82) et l'autre partie de boîtier de bloc d'accumulateurs (81), et reposant par la tête de vis (88) sur la surface d'appui de tête (86), et
- l'autre partie de bloc d'accumulateurs (81) présentant au moins une rainure (89), la rainure (89) s'étendant sur la surface d'appui de tête (86) dans le prolongement du filetage (85).

11. Bloc d'accumulateurs (1) selon l'une des revendications précédentes,
- le premier bloc d'accumulateurs (81) possédant un certain nombre d'ouvertures d'air (91), ledit nombre d'ouvertures d'air (91) étant disposées à une extrémité (81V) du premier bloc d'accumulateurs (81) au second bloc d'accumulateurs (82).

12. Bloc d'accumulateurs (1) selon l'une des revendications précédentes,
- le bloc d'accumulateurs (1) présentant une puissance d'entraînement électrique maximale (MAL) au minimum de 1 kW, notamment au minimum de 2 kW, et/ou au maximum de 10 kW, notamment au maximum de 5 kW.

13. Système d'usinage (100), le système d'usinage (100) possédant :
- un bloc d'accumulateurs (1) selon l'une des revendications précédentes, et
- un appareil d'usinage (101) à entraînement électrique,
- le bloc d'accumulateurs (1) et l'appareil d'usinage (101) étant configurés de façon à être connectés électriquement l'un à l'autre afin d'alimenter l'appareil d'usinage (101) en puissance d'entraînement électrique (AL) à partir du bloc d'accumulateurs (1).

14. Procédé de fabrication d'un bloc d'accumulateurs (1), notamment selon l'une des revendications 1 à 12, pour l'alimentation en puissance d'entraînement électrique (AL) d'un appareil d'usinage (101) entraîné électriquement, le procédé comprenant les étapes suivantes :
a) disposition de contacts de cellule (22) de plusieurs cellules d'accumulateur (21) et d'au moins une carte de circuit imprimé (52, 53, 54), ladite au moins une carte de circuit imprimé (52, 53, 54) étant connectée électriquement aux contacts de cellule (22), à l'intérieur d'une seconde partie de bloc d'accumulateurs (82) d'un boîtier de bloc d'accumulateurs (80), la seconde partie de bloc d'accumulateurs (82) étant configurée sous forme de moule de coulée pour une masse de scellement (99),
b) encapsulation des contacts de cellule (22) et de ladite au moins une carte de circuit imprimé (52, 53, 54) par la masse de scellement (99), et
c) disposition des cellules d'accumulateur (21) à l'intérieur du bloc d'accumulateurs (80) et scellement par l'autre de la seconde partie de bloc d'accumulateurs (82) et d'une première partie de bloc d'accumulateurs (81) du bloc d'accumulateurs (80).

15. Procédé selon la revendication 14,
- l'étape c) comprenant : disposition et scellement pendant que la masse de scellement (99) est à l'état liquide, et
- le procédé comprenant l'étape suivante : d) durcissement de la masse de scellement (99) à l'état solide.
